(19) Europäisches Patentamt / European Patent Office / Office européen des brevets

(11) **EP 4 475 588 B1**

(12) **EUROPEAN PATENT SPECIFICATION**

(45) Date of publication and mention
of the grant of the patent:
**17.06.2026 Bulletin 2026/25**

(21) Application number: **23762943.1**

(22) Date of filing: **02.03.2023**

(51) International Patent Classification (IPC):
*H04W 24/10* (2009.01)    *H04W 52/02* (2009.01)
*H04W 76/28* (2018.01)

(52) Cooperative Patent Classification (CPC):
**H04W 76/28; H04W 52/02; H04W 52/0216**

(86) International application number:
**PCT/CN2023/079185**

(87) International publication number:
**WO 2023/165545 (07.09.2023 Gazette 2023/36)**

(54) **DRX AND MULTI-RADIO DUAL CONNECTIVITY**

DRX UND MULTI RADIO DOPPELVERBINDUNGEN

DRX ET CONNECTIONS DOUBLES RADIO MULTIPLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.03.2022 CN 202210213306**

(43) Date of publication of application:
**11.12.2024 Bulletin 2024/50**

(73) Proprietor: Huawei Technologies Co., Ltd.
**Shenzhen, Guangdong 518129 (CN)**

(72) Inventor: **HU, Xingxing**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
**CN-A- 110 012 481     US-A1- 2019 313 272**

• ZTE: "Discussion on SFTD accuracy
requirements for NR DC", vol. RAN WG4, no.
Reno, US; 20190513 - 20190517, 3 May 2019
(2019-05-03), XP051716381, Retrieved from the
Internet <URL:http://www.3gpp.org/ftp/tsg%
5Fran/WG4%5FRadio/TSGR4%5F91/Docs/R4%
2D1906389%2Ezip> [retrieved on 20190503]
• HUAWEI: "Discussion on SFTD measurement for
late drop", 3GPP DRAFT; R2-1815097, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG2, no. Chengdu,
China; 20181008 - 20181012, 28 September 2018
(2018-09-28), Mobile Competence Centre ; 650,
route des Lucioles ; F-06921 Sophia-Antipolis
Cedex ; France
, XP051524463
• ZTE CORPORATION, SANECHIPS, NEC:
"Consideration on DRX coordination in ANR",
3GPP DRAFT; R2-1912769 CONSIDERATION ON
DRX COORDINATION IN ANR, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG2, no.
Chongqing, China; 20191014 - 20191018, 3
October 2019 (2019-10-03), Mobile Competence
Centre ; 650, route des Lucioles ; F-06921
Sophia-Antipolis Cedex ; France
, XP051790805

**Description**

This application claims priority to Chinese Patent Application No. 202210213306.X, filed with the China National Intellectual Property Administration on March 4, 2022 and entitled "COMMUNICATION METHOD AND APPARATUS'.

**TECHNICAL FIELD**

This application relates to the communication field, and more specifically, to communication methods, computer-readable storage medium and an apparatus.

**BACKGROUND**

In a wireless network, a terminal device may communicate with a plurality of base stations, which is referred to as multi-radio dual connectivity (multi-radio dual connectivity, MR-DC). A network side provides a communication service for the UE by using resources of the plurality of base stations, to provide high-rate transmission for the UE. Because the terminal device may simultaneously receive services of a plurality of cells (cells) served by one base station, a serving cell group provided by a master node (master node, MN) for the terminal device may be referred to as a master cell group (master cell group, MCG), and a serving cell group provided by a secondary node (secondary node, SN) for the terminal device may be referred to as a secondary cell group (secondary cell group, SCG).

Connected mode discontinuous reception (connected mode discontinuous reception, C-DRX) is a working mode for reducing power consumption of the terminal device in which the terminal device turns on a receiver only in necessary time to enter an active mode, so as to receive downlink data and signaling, and turns off the receiver in other time to enter a sleep mode, so as to stop receiving downlink data and the signaling.

In the MR-DC, the master node may configure DRX configuration information corresponding to the MCG for the UE, and the secondary node may configure DRX configuration information corresponding to the SCG for the UE. To reduce the power consumption of the terminal device, moments between which the terminal device continuously monitors a physical downlink control channel (physical downlink control channel, PDCCH) in DRX corresponding to the MCG are usually aligned as much as possible with moments between which the terminal device continuously monitors a PDCCH in DRX corresponding to the SCG, and moments between which the terminal device does not need to monitor the PDCCH are aligned as much as possible. Therefore, the master node and the secondary node exchange the DRX configuration information configured by the master node and the secondary node, so that a running time period of an on duration timer in the DRX corresponding to the MCG is the same as a running time period of an on duration timer in the DRX corresponding to the SCG, and a DRX cycle corresponding to the MCG is also the same as a DRX cycle corresponding to the SCG as much as possible. It should be understood that moments between which the terminal device continuously monitors the PDCCH during running of another timer is related to data scheduling of the MCG and the SCG. Therefore, it cannot be ensured that time periods corresponding to active time of the UE in all DRX cycles are the same.

In non-terrestrial communication, a cell has a large coverage area, and a non-terrestrial network device moves at an exceedingly high speed. When the network configures the MR-DC for the terminal device, and a radio link between a base station and the terminal device in the MR-DC is related to the non-terrestrial network device, for example, when the non-terrestrial network device is a master node or a secondary node, or a radio link between the master node or the secondary node and the terminal device needs to pass through the non-terrestrial network device, a difference between a propagation delay between the terminal device and the master node and a propagation delay between the terminal device and the secondary node rapidly changes. Even if DRX configuration information of an MCG and DRX configuration information of an SCG can enable alignment between a running time period of an on duration timer of the terminal device in DRX corresponding to the MCG and a running time period of an on duration timer of the terminal device in DRX corresponding to the SCG at the beginning, the running time period of the on duration timer of the terminal device in the DRX corresponding to the MCG may not be aligned with the running time period of the on duration timer of the terminal device in the DRX corresponding to the SCG due to subsequent mobility of the non-terrestrial network device. As a result, a power saving effect of the UE deteriorates and power consumption increases. ZTE: "Discussion on SFTD accuracy requirements for NR DC", 3GPP DRAFT; R4-1906389, 3 May 2019, Retrieved from the Internet:http://www.3gpp.org/ftp/tsg%5Fran/ WG4%5FRadio/TSGR4%5F91/Docs/R4%2D1906389%2Ezip [retrieved on 2019-05-03] forms part of the prior art.

**SUMMARY**

This application provides-acommunication methods, computer-readable storage medium and an apparatus, to reduce power consumption of a terminal device. The invention is carried out according to the appended independent claims. Optional features of the invention are carried out according to the dependent claims.

## BRIEF DESCRIPTION OF DRAWINGS

FIG. 1 is a diagram of a system architecture to which an embodiment of this application is applicable;

FIG. 2 is a diagram of a CU-DU architecture;

FIG. 3 is a diagram of a structure of a communication system according to an embodiment of this application;

FIG. 4 to FIG. 7 are diagrams of architectures of NTN communication systems;

FIG. 8 is a diagram of a DRX cycle;

FIG. 9 is a diagram of a short DRX cycle and a long DRX cycle;

FIG. 10 is a diagram of a time sequence of turning on an on duration timer and an inactivity timer in DRX;

FIG. 11 is a diagram in which running time periods of on duration timers that respectively correspond to an MCG and an SCG and that are of a UE are not aligned;

FIG. 12 is a schematic interaction flowchart of a communication method according to an embodiment of this application;

FIG. 13 is a schematic interaction flowchart of another communication method according to an embodiment of this application;

FIG. 14 is a schematic interaction flowchart of another communication method according to an embodiment of this application;

FIG. 15 is a schematic interaction flowchart of another communication method according to an embodiment of this application;

FIG. 16 is a block diagram of a communication apparatus according to an embodiment of this application;

FIG. 17 is a block diagram of another communication apparatus according to an embodiment of this application; and

FIG. 18 is a block diagram of a communication device according to an embodiment of this application.

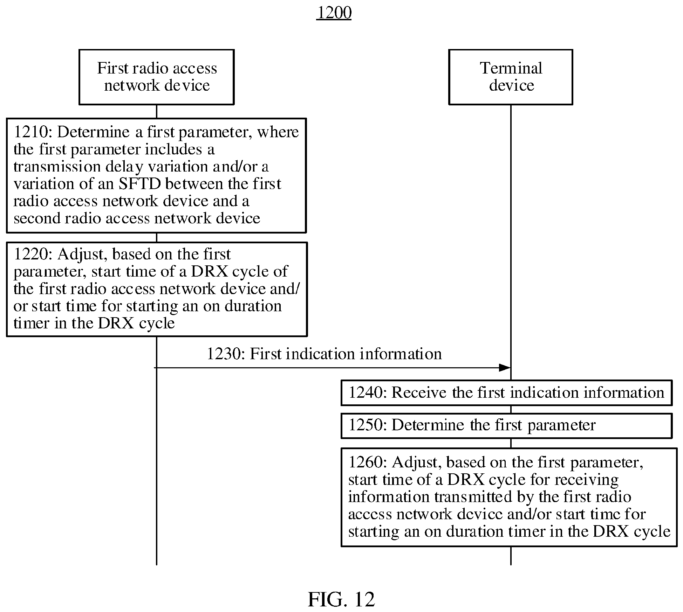

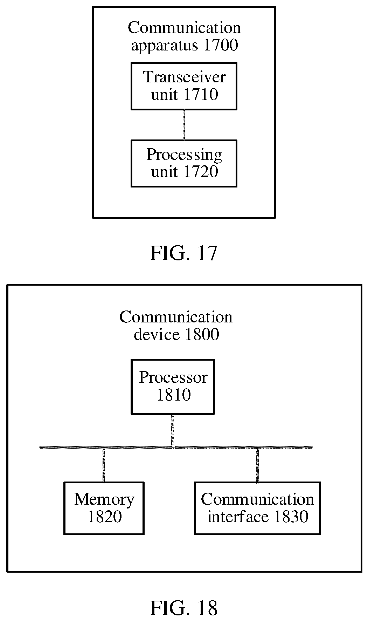

In the following, figures 12, 18 and their description are according to the claimed invention. The remaining description does not or does not fully correspond to the claimed invention but is useful for understanding the invention.

## DESCRIPTION OF EMBODIMENTS

The following describes the technical solutions of this application with reference to the accompanying drawings.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for gsm evolution, EDGE) system, a wideband code division multiple access (wideband code division multiple access, WCDMA) system, a code division multiple access 2000 (code division multiple access 2000, CDMA2000) system, a time division-synchronous code division multiple access (time division-synchronous code division multiple access, TD-SCDMA) system, a long term evolution (long term evolution, LTE) system, a satellite communication system, a $5^{th}$ generation (5th generation, 5G) system, or a new communication system emerging in the future.

The communication system applicable to this application includes one or more transmit ends and one or more receive ends. Signal transmission between the transmit end and the receive end may be performed by using a radio wave, or may be performed by using a transmission medium such as visible light, a laser, infrared, or an optical fiber.

For example, one of the transmit end and the receive end may be a terminal device, and the other may be a network device. For example, both the transmit end and the receive end may be network devices. The network device may be a core network device or a radio access network (radio access network, RAN) device.

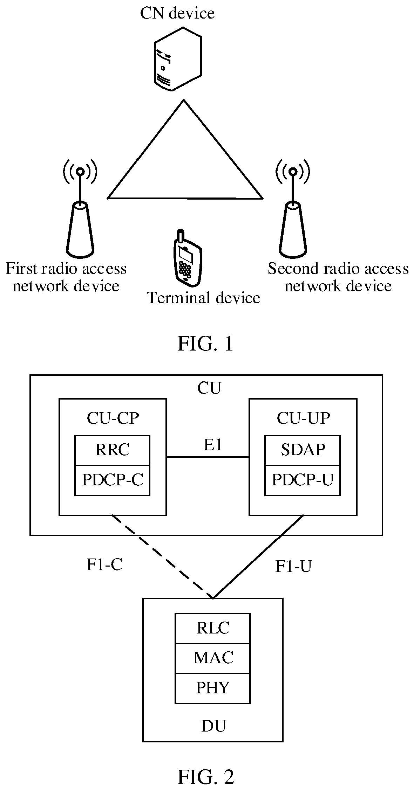

FIG. 1 is a diagram of a system architecture to which an embodiment of this application is applicable. The system includes a core network (core network, CN) device, a radio access network device, and a terminal device. The radio access network device may be referred to as a base station. The terminal device simultaneously communicates with a plurality of radio access network devices, which is dual-connectivity (dual-connectivity, DC) or multi-connectivity (multi-connectivity). The plurality of radio access network devices include a first radio access network device and a second radio access network device.

The terminal device in embodiments of this application is also referred to as a user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), and the like.

The radio access network device is a RAN node/device that connects a terminal to a wireless network, and may also be referred to as a base station. Currently, examples of some RAN nodes are as follows: a next generation NodeB (generation NodeB, gNB), a transmission reception point (transmission reception point, TRP), an evolved NodeB (evolved NodeB, eNB), a radio network controller (radio network controller, RNC), NodeB (NodeB, NB), a base station controller (base station controller, BSC), a base transceiver station (base transceiver station, BTS), a home base station, (for example, a home evolved NodeB, or a home NodeB, HNB), a baseband unit (baseband unit, BBU), or a wireless fidelity (wireless fidelity, Wi-Fi) access point (access point, AP), or the like. In addition, in a network structure, the radio access network device may include a central unit (central unit, CU) node, a distributed unit (distributed unit, DU) node, or a RAN device including the CU node and the DU node. The RAN device including the CU node and the DU node splits protocol layers of a gNB in an NR system. Functions of some protocol layers are controlled by the CU in a centralized manner, and functions of some or all of remaining protocol layers are distributed in the DU, and the CU controls the DU in a centralized manner. Further, the central unit CU may be further divided into a central unit-control plane (central unit-control plane, CU-CP) and a central unit-user plane (central unit-user plane, CU-UP). The CU-CP is responsible for a control plane function, and mainly includes radio resource control (radio resource control, RRC) and a PDCP packet data convergence protocol (packet data convergence protocol, PDCP) corresponding to the control plane. The PDCP-C is mainly responsible for data encryption and decryption, integrity protection, data transmission, and the like on the control plane. The CU-UP is responsible for a user plane function, and mainly includes a service data adaptation protocol (service data adaptation protocol, SDAP) and a PDCP corresponding to the user plane, that is, a PDCP-U. The SDAP is mainly responsible for processing data of a core network, mapping a flow to a bearer, processing data received by a terminal device, and sending processed data to the core network. The PDCP-U is responsible for data encryption and decryption, integrity protection, header compression, sequence number maintenance, data transmission, and the like on the user plane. The CU-CP and the CU-UP are connected through an E1 interface. The CU-CP represents that the gNB is connected to a control plane of the core network through an NG interface, and is connected to the DU through an F1 interface control plane, that is, an F1-C. The CU-UP is connected to the DU by using an F1 interface user plane, that is, an F1-U, and represents that the gNB is connected to a user plane of the core network through the NG interface. Certainly, in another possible implementation, the PDCP-C is alternatively in the CU-UP. FIG. 2 is a diagram of a CU-DU architecture.

The core network device is a device in a core network (core network, CN) that provides service support for a terminal. Currently, examples of some core network devices are as follows: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, user session establishment. The UPF entity may be a functional entity on a user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity.

To facilitate understanding of embodiments of this application, technologies related to embodiments of this application are briefly described.

I. Non-terrestrial communication

A non-terrestrial network (non-terrestrial network, NTN) includes a satellite communication network or an unmanned aerial system (unmanned aerial system, UAS) communication network. The UAS includes at least one of a tethered unmanned aerial vehicle (tethered UAV, TUA), a lighter than air (lighter than air, LTA) unmanned aerial vehicle, a heavier than air (heavier than air UAS, HTA) unmanned aerial vehicle, or a high altitude platform station (high altitude platform station, HAPS). With advantages of a wide coverage area, a long communication distance, high reliability, high flexibility, and a high throughput, the NTN communication is not affected by a geographical environment, a climate, and a natural disaster, and has been widely used in fields, such as aeronautical communication, maritime communication, and military communication. A satellite may be introduced to 5G to provide communication services for areas that are difficult to be covered by a terrestrial network, such as an ocean and a forest, enhance reliability of 5G communication, for example, provide communication services with higher stability and quality for trains, airplanes, and users on these transportation vehicles, and further provide more data transmission resources to support more connections.

In the non-terrestrial network, some network devices are not deployed on the ground. For example, a satellite runs in the air. These non-terrestrial network devices may move at a high speed. For example, a moving speed of a satellite is exceedingly high, for example, may reach 7.56 km/s.

Satellite communication research has been a hot topic in the research field since the 1960s. Thanks to a current concept of "anytime and anywhere" communication, a satellite communication network is playing a more important role in the future. Usually, a higher orbit of a satellite indicates a larger coverage area but a higher communication delay of the satellite. Usually, orbits of the satellite may be classified based on altitudes into the following.

(1) Low earth orbit (low earth orbit, LEO): An orbit altitude ranges from 160 km to 2000 km.
(2) Medium earth orbit (medium earth orbit, MEO): An orbit altitude ranges from 2000 km to 35786 km.
(3) Geostationary earth orbit (geostationary earth orbit, GEO): An orbit altitude is 35786 km, where a location, relative to the earth, of a satellite running in this orbit is not affected by rotation of the earth.

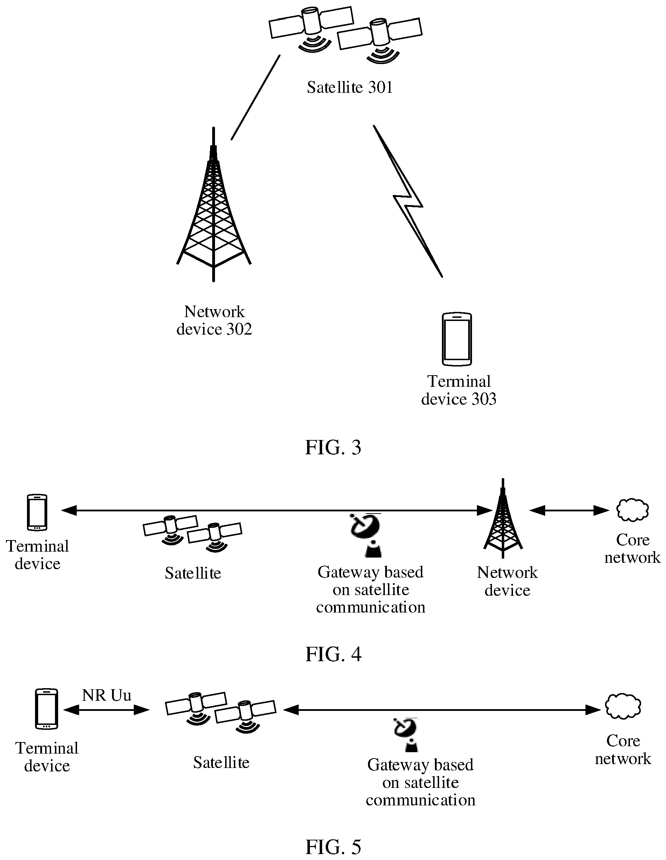

FIG. 3 is a diagram of a structure of a communication system 300 according to an embodiment of this application. The communication system 300 includes satellites 301, a network device 302, and a terminal device 303. The satellite 301 may alternatively be another air device. The communication system 300 may be a radio access network (radio access network, RAN) architecture system that is based on satellite communication (a non-terrestrial network, NTN).

The satellite 301 may be a transparent satellite in an NTN-based RAN system. Specifically, FIG. 4 is a diagram of an architecture of an NTN communication system. In this scenario, the satellite 301 is used for radio frequency filtering (radio frequency filtering) and frequency conversion and amplification (frequency conversion and amplification), in other words, the satellite 301 is mainly used as a layer 1 relay node (L1 relay) or an analog radio frequency repeater (analog radio frequency repeater). In the scenario, the satellite 301 only transparently sends a wireless protocol received from the terminal device to the network device 302 and transparently sends a wireless protocol received from the network device 302 to the terminal device.

Alternatively, the satellite 301 may be a regenerative satellite without inter-satellite link (regenerative satellite without inter-satellite link). Specifically, FIG. 5 is a diagram of an architecture of another NTN communication system. The satellite 301 has a processing function of a base station, and the satellite 301 may be used as a base station.

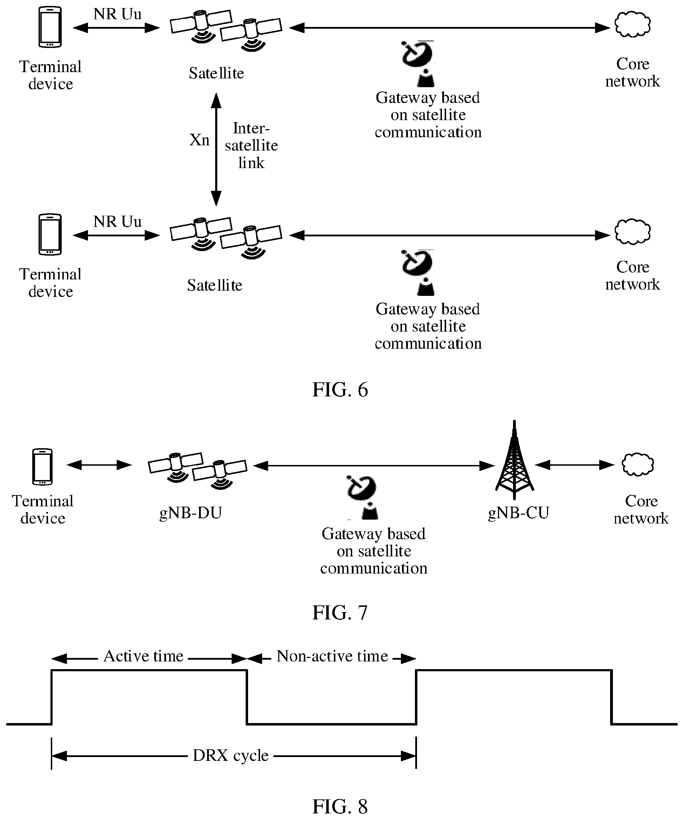

Alternatively, the satellite 301 may be used as a regenerative satellite with inter-satellite link (regenerative satellite with inter-satellite link). Specifically, FIG. 6 is a diagram of an architecture of another NTN communication system. The satellite 301 has a processing function of a base station, and the satellite 301 may be used as a base station. A difference between the communication system architecture shown in FIG. 6 and the communication system architecture shown in FIG. 5 lies in that there is a communication link between satellites in the communication system architecture shown in FIG. 6, but there is no communication link between satellites in the communication system architecture shown in FIG. 5.

Alternatively, the satellite 301 may be a regenerative satellite having a distributed unit (distributed unit, DU) processing function of a base station (an NG-RAN with a regenerative satellite based on gNB-DU). Specifically, FIG. 7 is a diagram of an architecture of another NTN communication system. In the scenario, the satellite may be a distributed unit (distributed unit, DU). Alternatively, the satellite 301 may be a device having an integrated access and backhaul (integrated access and backhaul, IAB) node function. It should be noted that, in some scenarios, the satellite and the network device may be collectively referred to as an access network device. In this case, the network device may be referred to as a ground device having a function of the access network device. A method in embodiments of this application may be used in the communication system 300 shown in FIG. 3.

II. Multi-radio dual connectivity (multi-radio dual connectivity, MR-DC)

In a wireless network, one UE may communicate with a plurality of base stations, which is referred to as MR-DC, DC for short. The plurality of base stations may be base stations that belong to a same radio access technology (radio access technology, RAT). For example, the plurality of base stations are all 4G base stations or all 5G base stations. Alternatively, the plurality of base stations may be base stations that belong to different RATs. For example, one of the plurality of base stations is a 4G base station, and another one is a 5G base station. A network side provides a communication service for the UE by using resources of the plurality of base stations, to provide high-rate transmission for the UE.

The MR-DC includes different DC scenarios, for example, evolved universal terrestrial radio access and new radio dual connectivity (E-UTRA-NR dual connectivity, EN-DC), next generation radio access network evolved universal terrestrial radio access and new radio dual connectivity (NG-RAN E-UTRA-NR dual connectivity, NGEN-DC), new radio and evolved universal terrestrial radio access dual connectivity (NR-E-UTRA dual connectivity, NE-DC), and new radio and new radio dual connectivity (NR-NR dual connectivity, NR-DC).

(1) EN-DC, namely, LTE-NR DC: A master node is an LTE base station connected to a 4G core network, and a secondary node is an NR base station.

(2) NGEN-DC: A master node is an LTE base station connected to a 5G core network, and a secondary node is an NR base station.

(3) NE-DC, namely, NR-LTE DC: A master node is an NR base station connected to a 5G core network, and a secondary node is an LTE base station.

(4) NR-DC, namely, NR-NR DC: Both a master node and a secondary node are NR base stations connected to a 5G core network.

For a UE in the MR-DC, a user plane of a secondary node may be connected to a core network connected to a master node, in other words, the core network may directly send data to the UE via the secondary node.

The EN-DC is sometimes also referred to as non-standalone (non-standalone, NSA) networking mode, because in an initial phase of 5G, a UE in an EN-DC network cannot camp on an NR cell. An NR base station on which a UE can camp is sometimes also referred to as an NR base station in a standalone (standalone, SA) networking mode.

Because the UE may simultaneously receive services of a plurality of cells (cells) served by one base station, a serving cell group provided by the master node (master node, MN) for the UE may be referred to as a master cell group (master cell group, MCG), and a serving cell group provided by the secondary node (secondary node, SN) for the UE may be referred to as a secondary cell group (secondary cell group, SCG). The MCG and the SCG each include at least one cell. When the MCG has only one cell, the cell is a primary cell (primary cell, PCell) of the UE; and when the SCG has only one cell, the cell is a primary secondary cell (primary secondary cell, PSCell) of the UE. To unify various nouns in NR, the PCell and the PSCell are collectively referred to as a special cell (special cell, SpCell). When the MCG and the SCG each have a plurality of cells, a cell other than the SpCell is referred to as a secondary cell (secondary cell, SCell). Carrier aggregation (carrier aggregation, CA) is performed on SCells and SpCells in cell groups (cell groups, CGs), to provide transmission resources for the UE together. The following explains some key names in detail.

Carrier aggregation technology: Specifically indicates configuring a plurality of component carriers (cells) for a single UE to perform data transmission together.

Primary cell: Indicates a cell working on a primary component carrier. A UE performs an initial connection setup process or starts a connection reestablishment process in the cell. In a handover process, the cell is indicated as a primary cell.

Primary secondary cell: Indicates a cell, for example, a cell in which a random access process is omitted when an SCG changing procedure is performed, that is in one or more cells belonging to an SCG and in which a UE is indicated to perform random access or initial physical uplink control channel (physical uplink control channel, PUSCH) transmission.

Secondary cell: Indicates a cell working on a secondary component carrier. Once an RRC connection is established, the secondary cell may be configured to provide an additional radio resource.

Serving cell (serving cell): For a UE in an RRC-connected (RRC_CONNECTED) mode, if CA/DC is not configured and there is only one serving cell, the serving cell is a PCell; and if CA/DC is configured, a serving cell set includes a PCell and an SCell. Each component carrier (component carrier, CC) corresponds to one independent cell. A UE for which the CA/DC is configured is connected to one PCell and a maximum of 31 SCells. A PCell and all SCells of a UE form a cell set of the UE. The serving cell may be a PCell or an SCell.

III. Connected mode discontinuous reception (connected mode discontinuous reception, C-DRX) mechanism

The C-DRX represents a DRX mechanism in a connected mode, and therefore may also be referred to as DRX for short in the connected mode. The DRX is a working mode for reducing power consumption of a UE in which the UE turns on a receiver only in necessary time to enter an active mode, so as to receive downlink data and signaling, and turns off the receiver in other time to enter a sleep mode, so as to stop receiving the downlink data and the signaling.

1. DRX benefit

In a DRX working mode, the UE does not need to continuously monitor a physical downlink control channel (physical downlink control channel, PDCCH). This can reduce power consumption of the UE and prolongs time in which the UE has power.

A DRX mode is an intermediate mode between continuous reception and an RRC idle (RRC_idle) mode. Existence of the DRX mode reduces a probability of switching from an RRC connected mode to the RRC idle mode, so that signaling overheads of an entire network can be reduced. This benefit is more definite in a network in which a usage proportion of smartphones is high.

2. DRX cycle (DRX cycle)

In the DRX mechanism, the UE wakes up cyclically for a period of time in each cycle to monitor whether there is data of the UE. There are two types of DRX cycles: a long discontinuous reception cycle (long DRX cycle) and a short discontinuous reception cycle (short DRX cycle). The long DRX cycle is an integer multiple of the short DRX cycle. A DRX cycle usually includes two time periods: active time (active time) and non-active time (non-active time). A terminal device monitors a PDCCH in the active time, and may be in a sleep mode in the non-active time and does not monitor the PDCCH, to reduce power consumption of the terminal. FIG. 8 is a diagram of a DRX cycle.

3. DRX-related timers (timers)

(1) On duration timer (on duration timer)

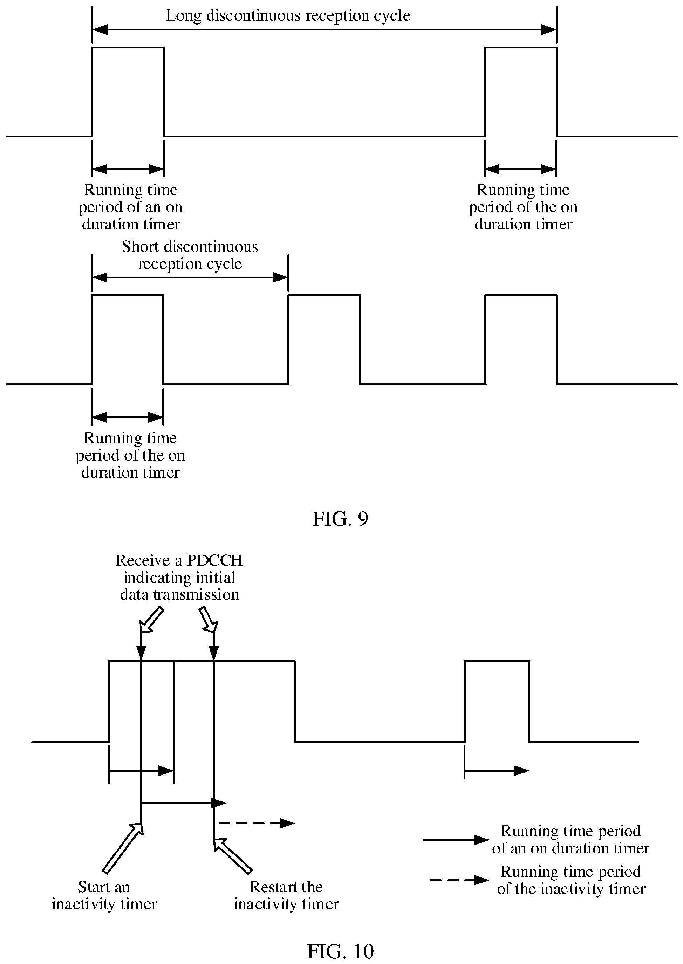

The on duration timer specifies a quantity of consecutive subframes (subframes) of a segment. In this period of time, the UE needs to continuously monitor a PDCCH. The UE needs to start the on duration timer at the beginning of each new DRX cycle. The DRX cycle includes a running time period of the on duration timer.
If both a short DRX cycle and a long DRX cycle are configured for the UE, running time periods of the on duration timer in the two DRX cycles are the same. FIG. 9 is a diagram of a short DRX cycle and a long DRX cycle.

(2) DRX inactivity timer (inactivity timer)

The inactivity timer indicates a time period in which the UE needs to continuously monitor a PDCCH, and this time period is in a unit of downlink subframe (downlink subframe). The UE starts or restarts the timer when successfully demodulating, within active time, a PDCCH indicating initial data transmission of the UE. FIG. 10 is a diagram of a time sequence of turning on an on duration timer and an inactivity timer in DRX.
The UE restarts the inactivity timer after receiving, within the active time, the PDCCH indicating the initial data transmission again. After the inactivity timer expires, the UE enters a sleep mode.

(3) Uplink (uplink, UL) hybrid automatic repeat request (hybrid automatic repeat request, HARQ) round-trip time (round-trip time, RTT) timer (UL HARQ RTT Timer)

The timer specifies a smallest quantity of subframes after which a next UL HARQ retransmission grant (grant) occurs. The timer is started when an uplink initial data transmission grant or an uplink data retransmission grant occurs. A start occasion is at an uplink subframe indicated by the grant.

(4) Downlink (downlink, DL) hybrid automatic repeat request (hybrid automatic repeat request, HARQ) round-trip time (round-trip time, RTT) timer (DL HARQ RTT Timer)

The timer specifies a smallest quantity of subframes after which a next DL HARQ retransmission grant (grant) occurs.

(5) Uplink retransmission timer (UL retransmission timer)

The timer indicates maximum time in which the UE waits for a UL retransmission grant. When a UL HARQ RTT timer expires, if corresponding uplink data is not correctly demodulated, the timer needs to be started.
It should be understood that, during running of the UL retransmission timer, the UE also needs to monitor a PDCCH, and when receiving a PDCCH indicating initial data transmission, the UE needs to start an inactivity timer.

(6) Downlink retransmission timer (retransmission timer)

The timer indicates maximum time in which the UE waits for a DL retransmission request (request). When a downlink HARQ RTT timer expires, if corresponding downlink data is not correctly demodulated, the timer needs to be started. During running of the retransmission timer, the UE also needs to monitor a PDCCH, and when receiving a PDCCH indicating initial data transmission, the UE needs to start an inactivity timer.

(7) Uplink retransmission timer (retransmission timer)

The timer indicates maximum time in which the UE waits for a UL retransmission grant. The timer is started when a downlink HARQ RTT timer expires.

4. Active time

The active time is total duration in which the UE monitors a PDCCH. The active time includes a running time period of an on duration timer, time for which the UE monitors the PDCCH before an inactivity timer expires, and time for which the UE continuously monitors the PDCCH before a retransmission timer expires.

The active time may further include: a random access-contention resolution timer (ra-ContentionResolutionTimer) or message B-response window (msgB-response window) running period, a pending (pending) period after the UE sends a scheduling request (scheduling request, SR) on a PUCCH, and a period in which the UE does not receive a PDCCH indicating new transmission after successfully receiving a random access response (random access response, RAR) that is based on non-contention-based random access.

5. Moment at which the UE starts the DRX

When a subframe number (subframe number) of a subframe satisfies the following Formula (1), the UE starts an on duration timer.

$$[(SFN \times 10) + \text{subframe number}] \bmod (\text{DRX-cycle}) = \text{drx-StartOffset} \quad (1)$$

SFN is a system frame number (system frame number) corresponding to the subframe, mod represents a modulo operation, and drx-StartOffset is an offset parameter in DRX configuration, and is used to determine a subframe at which a DRX cycle starts. The system frame may also be referred to as a radio frame. A radio frame is 10 ms, a radio frame may include a plurality of subframes (subframes), and each subframe includes one or more slots. It should be noted that Formula (1) is only used as an implementation of this application, and may be extended to another formula.

In the MR-DC, the master node may configure DRX configuration information corresponding to the MCG for the UE, and the secondary node may configure DRX configuration information corresponding to the SCG for the UE. To reduce power consumption of the UE, moments between which the UE continuously monitors a PDCCH in DRX corresponding to an MCG are usually aligned with moments between which the UE continuously monitors a PDCCH in DRX corresponding to an SCG as much as possible, and moments between which the UE does not need to monitor the PDCCH are aligned as much as possible. It should be understood that, after the moments between which the UE does not need to monitor the PDCCH are aligned, the UE may turn off, between these moments, some common modules that need to be used by the UE in both the MCG and the SCG, to save more power. Therefore, the master node and the secondary node exchange the DRX configuration information configured by the master node and the secondary node, so that a running time period of an on duration timer in the DRX corresponding to the MCG is the same as a running time period of an on duration timer in the DRX corresponding to the SCG, and a DRX cycle corresponding to the MCG is also the same as a DRX cycle corresponding to the SCG as much as possible. Moments between which the UE continuously monitors the PDCCH during running of another timer is related to data scheduling of the MCG and the SCG. Therefore, it cannot be ensured that time periods corresponding to active time of the UE in all DRX cycles are the same.

Usually, downlink timings corresponding to the master node and the secondary node are different, in other words, absolute time points corresponding to start points of same radio frames are different. Even in a case of synchronous downlink timings, because delays of information transmission between the UE and different base stations are different, start points of radio frames received by the UE from cells served by the different base stations are different. Therefore, when configuring the DRX configuration information, the master node and the secondary node need to consider the difference between the start points of the radio frames received by the UE from the different cells, to configure the DRX configuration information respectively corresponding to the MCG and the SCG, so that the running time period of the on duration timer in the DRX corresponding to the MCG is aligned with the running time period of the on duration timer in the DRX corresponding to the SCG as much as possible. To obtain this difference, system frame number and frame timing difference (SFN and frame timing difference, SFTD) measurement is introduced.

The SFTD measurement means that the UE is enabled to measure and observe a system frame number and frame timing difference between two cells. The SFTD includes the following two parts.

(1) SFN offset (SFN offset): $\text{SFN offset} = (\text{SFN}_{\text{PCell}} - \text{SFN}_{\text{TRGCell}}) \bmod 1024$, where $\text{SFN}_{\text{PCell}}$ is an SFN of a radio frame received in a PCell, $\text{SFN}_{\text{TRGCell}}$ is an SFN of a radio frame received in a target cell, and a start point of the radio frame received in the target cell is the closest to that of the radio frame received by the UE in the PCell.

(2) Frame boundary offset (frame boundary offset): $[(T_{\text{FrameBoundaryPCell}} - T_{\text{FrameBoundaryTRGCell}})/5]$, where $T_{\text{FrameBoundaryPCell}}$ indicates a moment corresponding to a start point of a radio frame received by the UE in the PCell, $T_{\text{FrameBoundaryTRGCell}}$ indicates a moment of a start point of a radio frame received by the UE in the target cell, and the start moment of the radio frame received in the target cell is temporally the closest to the start point of the radio frame received by the UE in the PCell.

A unit of the SFN offset is radio frame, that is, 10 ms, and a unit of the frame boundary offset is $T_s$, where $T_s = 1/(\Delta f_{ref} \cdot N_{f \cdot ref})$, $\Delta f_{ref} = 15 \cdot 10^3$ *Hz*, and $N_{f,ref} = 2048$ . A unit of $T_s$ is second.

In an actual reporting process, the UE usually separately reports the SFN offset and the frame boundary offset, and the SFTD is equal to a sum of the SFN offset and the frame boundary offset.

Currently, the SFTD measurement is one-time, to be specific, after a network side sends an SFTD measurement configuration to the UE, the UE performs measurement and reports an SFTD measurement result. After the UE reports the measurement result, the UE does not perform SFTD measurement or report the SFTD measurement result anymore, unless the network side reconfigures the SFTD measurement.

In non-terrestrial communication, a cell has a wide coverage area, and a moving speed of a non-terrestrial network device is exceedingly high. For example, the moving speed is 7.56 km/s. For the UE, a distance between the non-terrestrial network device and the UE changes rapidly, and the UE may not be within the coverage area of the cell after 130s. When a network configures the MR-DC for the UE, and a radio link between a base station in the MR-DC and a terminal device is related to the non-terrestrial network device, for example, a difference between a distance between the UE and a non-terrestrial network device corresponding to a PCell and a distance between the UE and a non-terrestrial network device corresponding to a PSCell changes rapidly, or a difference between a propagation delay between the UE and a base station corresponding to the PCell and a propagation delay between the UE and a base station corresponding to the PSCell changes rapidly. A relationship between a start point of a radio frame of the PCell received by the UE and a start point of a radio frame of the PSCell received by the UE dynamically changes, that is, an SFTD between the PCell and the PSCell changes rapidly.

Even if the DRX configuration information of the MCG and the DRX configuration information of the SCG can enable alignment between the running time period of the on duration timer of the UE in the DRX corresponding to the MCG and the running time period of the on duration timer of the UE in the DRX corresponding to the SCG at the beginning, the running time period of the on duration timer of the UE in the DRX corresponding to the MCG may not be aligned with the running time period of the on duration timer of the UE in the DRX corresponding to the SCG due to subsequent mobility of the non-terrestrial network device. As a result, a power saving effect of the UE deteriorates and the power consumption increases. Assuming that a length of the DRX cycle in the DRX configuration information of the MCG is the same as a length of the DRX cycle in the DRX configuration information of the SCG, there is a high probability that a time period in which the UE may not monitor the PDCCH in the MCG can be aligned with a time period in which the UE may not monitor the PDCCH in the SCG.

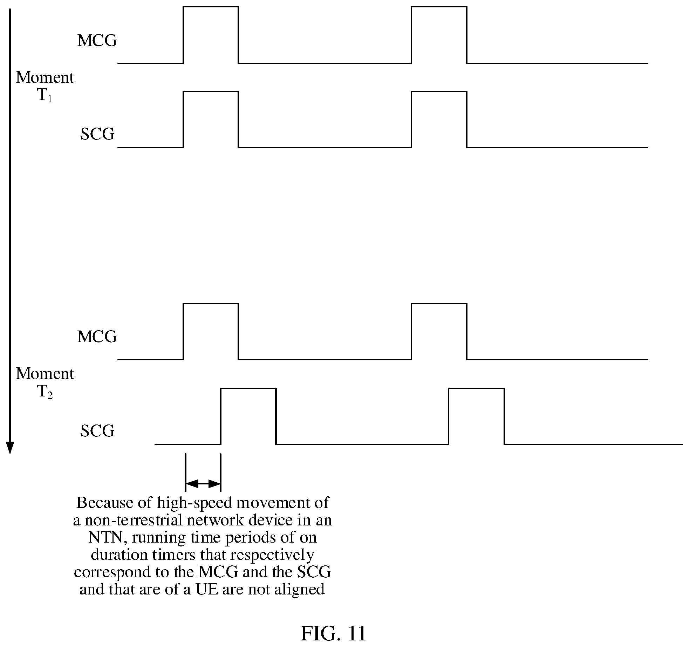

For example, an NTN and a terrestrial network (terrestrial network, TN) form MR-DC, a base station corresponding to the TN is an MN of the UE, and a base station corresponding to the NTN is an SN of the UE. It is assumed that the UE is stationary, and a propagation delay between the UE and the base station/MN corresponding to the TN is fixed. Because of high-speed mobility of a non-terrestrial network device in the NTN, a propagation delay between the UE and the base station corresponding to the NTN is variable. FIG. 11 is a diagram in which running time periods of on duration timers that respectively correspond to an MCG and an SCG and that are of a UE are not aligned. At a moment $T_1$, a running time period of an on duration timer that corresponds to the MCG and that is of the UE is aligned with a running time period of an on duration timer that corresponds to the SCG and that is of the UE. After a period of time, at a moment $T_2$, because of high-speed mobility of a non-terrestrial network device in the NTN, the running time periods of the on duration timers that respectively correspond to the MCG and the SCG and that are of the UE are not aligned. In other words, a time period in which the UE receives information transmitted by the MN is not aligned with a time period in which the UE receives information transmitted by the SN.

Therefore, an embodiment of this application provides a communication method, to enable alignment between a running time period of an on duration timer that corresponds to an MCG and that is of a terminal device and a running time period of an on duration timer that corresponds to an SCG and that is of the terminal device. This reduces power consumption of the terminal device.

It should be noted that when a radio access network device is a radio access network device in non-terrestrial network communication, in different scenarios, the radio access network device may be a network device not deployed on the ground, or may be a network device deployed on the ground. For details, refer to the foregoing descriptions of various communication system architectures in the NTN.

FIG. 12 is a schematic interaction flowchart of a communication method 1200 according to the claimed invention. This embodiment of this application is applicable to communication between a terminal device and a plurality of radio access network devices. In other words, the method is applicable to MR-DC, and the plurality of radio access network devices include a first radio access network device and a second radio access network device. The first radio access network device is a radio access network device in a non-terrestrial network, and the second radio access network device may be a radio access network device in a terrestrial network, or may be a radio access network device in a non-terrestrial network. A serving cell group provided by the first radio access network device for the terminal device may be referred to as an SCG, and a serving cell group provided by the second radio access network device for the terminal device may be referred to as an MCG; or a serving cell group provided by the first radio access network device for the terminal device may be referred to as an MCG, and a serving cell group provided by the second radio access network device for the terminal device may be referred to as an SCG.

1210: Because of high-speed mobility of a non-terrestrial network device related to the first radio access network device and/or high-speed mobility of a non-terrestrial network device related to the second radio access network device, the first radio access network device determines a first parameter at time intervals, where the first parameter is used to adjust start time of a DRX cycle of the first radio access network device and/or start time for starting a timer in the DRX cycle, or is used to adjust start time of a DRX cycle of the second radio access network device and/or start time for starting a timer in the DRX cycle. It may be understood that the first parameter may be used to adjust the start time of the DRX cycle of the first radio access network device, may be used to adjust the start time for starting the timer in the DRX cycle of the first radio access network device, or may be used to adjust both the start time of the DRX cycle of the first radio access network device and the start time for starting the timer in the DRX cycle. The first parameter may be used to adjust the start time of the DRX cycle of the second radio access network device, may be used to adjust the start time for starting the timer in the DRX cycle of the second radio access network device, or may be used to adjust both the start time of the DRX cycle of the second radio access network device and the start time for starting the timer in the DRX cycle. It should be understood that, in a DRX cycle, when start time of the DRX cycle keeps being the same as start time for starting a timer, adjusting one is equivalent to adjusting both. In a DRX cycle, when start time of the DRX cycle is not necessarily the same as start time for starting a timer, if only one is adjusted, the other does not change. In this case, both the start time of the DRX cycle and the start time for starting the timer in the DRX cycle need to be adjusted. It should be noted that before this step, the master node and the secondary node separately configure DRX configuration information for the terminal device. The master node sends DRX configuration information corresponding to the MCG to the terminal device, and the secondary node sends DRX configuration information corresponding to the SCG to the terminal device.

For example, the first parameter includes a transmission delay variation and/or a variation of an SFTD between the first radio access network device and the second radio access network device. In other words, the first parameter may include the transmission delay variation, or may include the variation of the SFTD between the first radio access network device and the second radio access network device.

Optionally, the transmission delay variation includes a variation of a first transmission delay of information transmission between the first radio access network device and the terminal device, a variation of a difference between the first transmission delay and a second transmission delay of information transmission between the second radio access network device and the terminal device, or a variation of the second transmission delay of the information transmission between the second radio access network device and the terminal device. In an implementation, the first transmission delay may be determined based on round-trip time between the first radio access network device and the terminal device, and the first transmission delay is equal to a half of the round-trip time between the first radio access network device and the terminal device. Similarly, the second transmission delay may be determined based on round-trip time between the second radio access network device and the terminal device, and the second transmission delay is equal to a half of the round-trip time between the second radio access network device and the terminal device.

Specifically, the first radio access network device determines the transmission delay variation through measurement or calculation, or the first radio access network device receives, from the terminal device, a transmission delay variation determined by the terminal device through measurement; and/or the first radio access network device receives the variation of the SFTD between the first radio access network device and the second radio access network device from the terminal device or the second radio access network device, where the variation of the SFTD is measured by the terminal device and reported to the first radio access network device or the second radio access network device; and/or the first radio access network device receives the second transmission delay or the variation of the transmission delay from the second radio access network device, where the second transmission delay or the variation of the transmission delay may be determined by the second radio access network device through measurement, or may be determined by the terminal device through measurement and sent to the second radio access network device. It may be understood as that the transmission delay variation may be determined by the first radio access network device through measurement, or may be determined by the terminal device through measurement and sent to the first radio access network device, or may be determined by the second radio access network device.

For example, the first parameter is the variation of the first transmission delay of the information transmission between the first radio access network device and the terminal device. For example, the serving cell group provided by the first radio access network device for the terminal device is the SCG, the serving cell group provided by the second radio access network device for the terminal device is the MCG, and the first radio access network device determines the start time of the DRX cycle of the first radio access network device and/or the start time for starting the on duration timer in the DRX cycle.

The first radio access network device may obtain the variation of the first transmission delaybased on location information of the terminal device, location information of a relay network device corresponding to the first radio access network device, and location information of the first radio access network device at a current moment, and location information of the terminal device, location information of the relay network device corresponding to the first radio access network device, and location information of the first radio access network device at a reference point moment. The relay network device may exist or may not exist. For example, the relay network device exists. The variation of the first transmission delay $\Delta T_{SCG}$ is equal to a difference between a transmission delay $T_{SCG\_reference\ moment}$ of the information transmission between the first radio access network device and the terminal device at the reference point moment and a transmission delay $T_{SCG\_current\ moment}$ of the information transmission between the first radio access network device and the terminal device at the current moment. $T_{SCG\_reference\ moment}$ = (Distance between the terminal device and the relay network device at the reference point moment + Distance between the relay network device and the first radio access network device at the reference point moment)/Light speed, $T_{SCG\_current\ moment}$ = (Distance between the terminal device and the relay network device at the current moment + Distance between the relay network device and the first radio access network device at the current moment)/Light speed, and $\Delta T_{SCG} = T_{SCG\_reference\ moment} - T_{SCG\_current\ moment}$.

The terminal device may determine the variation of the first transmission delay of the information transmission between the first radio access network device and the terminal device by determining a variation of the round-trip time between the terminal device and the first radio access network device. The variation of the round-trip time RTT between the terminal device and the first radio access network device is $\Delta RTT = RTT_{SCG\_reference\ moment} - RTT_{SCG\_current\ moment}$, where $RTT_{SCG\_reference\ moment}$ is round-trip time that is of the information transmission between the terminal device and the first radio access network device and that is measured by the terminal device at a reference point moment, and $RTT_{SCG\_current\ moment}$ is round-trip time that is of the information transmission between the terminal device and the first radio access network device and that is measured by the terminal device at a current moment. The reference point moment may be a moment at which the terminal device receives the DRX configuration information of the first radio access network device, or the reference point moment may be a reference point moment specified by a network side. For example, the network side indicates the terminal device to use a start moment of an SFN or a subframe sent by the first radio access network device as the reference point moment. Therefore, the variation of the round-trip time between the terminal device and the first radio access network device is equal to $1/2(RTT_{SCG\_reference\ moment} - RTT_{SCG\_current\ moment})$. It should be understood that $1/2(RTT_{SCG\_reference\ moment} - RTT_{SCG\_current\ moment})$ determined by the terminal device is equal to $\Delta T_{SCG}$.

Specifically, the terminal device may obtain $RTT$ according to the following Formula (2):

$$RTT = T_{TA,\ SCG} + K_{MAC\_SCG} \quad (2)$$

$T_{TA,SCG} = (N_{TA\_SCG} + N_{TA,UE\text{-}specific\_SCG} + N_{TA,common\_SCG} + N_{TA,offset\_SCG}) \times T_c$. $K_{MAC\_SCG}$ is a value broadcast by a primary secondary cell controlled by the first radio access network device. $N_{TA\_SCG}$ is a value of a timing advance (timing advance, TA) corresponding to the terminal device in the SCG, where the value is 0 when a physical random access channel (physical random access channel, PRACH) is initiated, and is subsequently obtained by updating based on a TA in a RAR in a RACH process and a subsequent media access control control element timing advance command (media access control control element timing advance command, MAC CE TA command). $N_{TA,UE\text{-}specific\_SCG}$ is obtained by the terminal device based on location information of the terminal device and location information of the first radio access network device. $N_{TA,common\_SCG}$ is a value broadcast by the primary secondary cell controlled by the first radio access network device. $N_{TA,offset\_SCG}$ and $T_c$ are fixed values. For details, refer to a 38.213 protocol.

For example, the first parameter is the variation of the difference between the first transmission delay of the information transmission between the first radio access network device and the terminal device and the second transmission delay of the information transmission between the second radio access network device and the terminal device. For example, the serving cell group provided by the first radio access network device for the terminal device is the SCG, the serving cell group provided by the second radio access network device for the terminal device is the MCG, and the first radio access network device determines the start time of the DRX cycle of the first radio access network device and/or the start time for starting the on duration timer in the DRX cycle.

The first radio access network device may obtain $T_{SCG\_reference\ moment}$ and $T_{SCG\_current\ moment}$ based on location information of the terminal device, location information of a relay network device corresponding to the first radio access network device, and location information of the first radio access network device respectively at a current moment and a reference point moment. The second radio access network device may obtain $T_{MCG\_reference\ moment}$ and $T_{MCG\_current\ moment}$ based on the location information of the terminal device, location information of a relay network device corresponding to the second radio access network device, and location information of the second radio access network device respectively at the current moment and the reference point moment. $T_{MCG\_reference\ moment}$ is a transmission delay of the information transmission between the second radio access network device and the terminal device at the reference moment, and $T_{MCG\_current\ moment}$ is a transmission delay of the information transmission between the second radio access network device and the terminal device at the current moment. The second radio access network device may send the determined $T_{MCG\_reference\ moment}$ and $T_{MCG\_current\ moment}$ to the first radio access network device, or the first radio access network device may determine $T_{MCG\_reference\ moment}$ and $T_{MCG\_current\ moment}$. Therefore, the variation that is of the difference between the first transmission delay and the second transmission delay and that is determined by the first radio access network device through calculation is equal to $[(T_{MCG\_reference\ moment} - T_{SCG\_reference\ moment})-(T_{MCG\_current\ moment} - T_{SCG\_current\ moment})]$. Optionally, the second radio access network device may directly send $T_{MCG\_reference\ moment}$ and $T_{MCG\_current\ moment}$ to the first radio access network device, or may send location information used to calculate $T_{MCG\_reference\ moment}$ and $T_{MCG\_current\ moment}$ to the first radio access network device.

The terminal device may determine the variation of the difference between the first transmission delay and the second transmission delay by determining the round-trip time of the information transmission between the terminal device and the first radio access network device and the round-trip time of the information transmission between the terminal device and the second radio access network device. The variation of the difference between the first transmission delay and the second transmission delay is equal to $1/2[(RTT_{MCG\_reference\ moment} - RTT_{SCG\_reference\ moment})-(RTT_{MCG\_current\ moment} - RTT_{SCG\_current\ moment})]$, where $RTT_{MCG\_reference\ moment}$ is round-trip time that is of the information transmission between the terminal device and the second radio access network device and that is measured by the terminal device at a reference point moment, $RTT_{SCG\_reference\ moment}$ is round-trip time that is of the information transmission between the terminal device and the first radio access network device and that is measured by the terminal device at the reference point moment, $RTT_{MCG\_current\ moment}$ is round-trip time that is of the information transmission between the terminal device and the second radio access network device and that is measured by the terminal device at a current moment, and $RTT_{SCG\_current\ moment}$ is round-trip time that is of the information transmission between the terminal device and the first radio access network device and that is measured by the terminal device at the current moment.

For example, the first parameter is the variation of the system frame number and frame timing difference SFTD between the first radio access network device and the second radio access network device.

The variation of the SFTD obtained by the terminal device through measurement is $\Delta SFTD=SFTD_{reference\ moment} - SFTD_{current\ moment}$, where $SFTD_{reference\ moment}$ is an SFTD between the first radio access network device and the second radio access network device measured by the terminal device at a reference point moment, and $SFTD_{current\ moment}$ is an SFTD between the first radio access network device and the second radio access network device measured by the terminal device at a current moment. The variation of the SFTD is in a unit of 1 ms, and an SFTD is determined based on values of an SFN offset and a frame boundary offset, that is, SFTD = SFN offset * 10 + Frame boundary offset * 1000. After obtaining the variation of the SFTD through measurement, the terminal device sends the variation of the SFTD to the first radio access network device.

It should be understood that when the serving cell group provided by the first radio access network device for the terminal device is the MCG, and the serving cell group provided by the second radio access network device for the terminal device is the SCG, a process in which the first radio access network device determines the first parameter is similar to the foregoing process. Details are not described herein again.

1220: The first radio access network device adjusts, based on the first parameter, the start time of the DRX cycle of the first radio access network device or the second radio access network device and/or the start time for starting the on duration timer in the DRX cycle, so that a running time period of an on duration timer in DRX corresponding to the first radio access network device is aligned with a running time period of an on duration timer in DRX corresponding to the second radio access network device.

For example, the first radio access network device adjusts, based on the transmission delay variation, the start time for starting the on duration timer in the DRX cycle of the first radio access network device. For example, the serving cell group provided by the first radio access network device for the terminal device is the SCG, and the serving cell group provided by the second radio access network device for the terminal device is the MCG. The DRX configuration information of the first radio access network device includes DRX-cycle$_{SCG}$ and drx-StartOffset$_{SCG}$. After the first radio access network device determines the transmission delay variation Var_Diff$_{SCG}$, the first radio access network device determines that a start moment of the on duration timer in the DRX of the SCG should satisfy the following Formula (3) or Formula (4):

$$[(SFN_{\_SCG} \times 10) + subframe\ number_{\_SCG} + Var\_Diff_{\_SCG}]\ mod\ (DRX-cycle_{\_SCG}) = drx-StartOffset_{\_SCG} \quad (3)$$

$$\left[(SFN_{\_SCG} \times 10) + subframe\ number_{\_SCG}\right]\ mod\ (DRX-cycle_{\_SCG}) = (drx-StartOffset_{\_SCG} + Var\_Diff_{\_SCG})\ mod\ (DRX-cycle_{\_SCG}) \quad (4)$$

It should be understood that, if Var_Diff$_{SCG}$ is a negative value, a subframe number of a subframe corresponding to the moment at which the terminal device starts the on duration timer corresponding to the SCG decreases; and if Var_Diff$_{SCG}$ is a positive value, a subframe number of a subframe corresponding to the moment at which the terminal device starts the on duration timer corresponding to the SCG increases.

Optionally, in an implementation, when the first radio access network device includes a CU node and a DU node, the CU node or the DU node of the first radio access network device may adjust, based on the first parameter, the start time of the DRX cycle of the first radio access network device or the second radio access network device and/or the start time for starting the on duration timer in the DRX cycle. Optionally, when the DU node of the first radio access network device performs adjustment based on the first parameter, the CU node of the first radio access network device may send at least one of the following content to the DU node: the first parameter and the location information of the terminal device.

1230: The first radio access network device sends first indication information to the terminal device, where the first indication information indicates the terminal device to adjust start time of a DRX cycle for receiving information transmitted by the first radio access network device or the second radio access network device and/or start time for starting an on duration timer in the DRX cycle, so that the start time for starting the on duration timer in the DRX cycle in which the terminal device receives the information transmitted by the first radio access network device is aligned with the start time for starting the on duration timer in the DRX cycle in which the terminal device receives the information transmitted by the second radio access network device. Optionally, the first indication information may include the transmission delay variation. Optionally, the first indication information may alternatively include a value of drx-StartOffset plus the transmission delay variation. Specifically, the first radio access network device may send the first indication information to the terminal device by using an RRC message or a MAC CE message.

Optionally, in an implementation, after receiving the DRX configuration information configured by the first radio access network device or the second radio access network device and starting the on duration timer for the first time according to Formula (1), the terminal device does not determine, according to Formula (1), a moment at which the on duration timer is to be started, but fixedly starts the on duration timer based on the DRX cycle. In other words, after starting the on duration timer, the terminal device starts the on duration timer again after a fixed offset of the DRX cycle. Therefore, the first radio access network device may send the first indication information to the terminal device, to indicate the terminal device to adjust the start time of the DRX cycle for receiving the information transmitted by the first radio access network device or the second radio access network device and/or the start time for starting the on duration timer in the DRX cycle, so that the start time for starting the on duration timer in the DRX cycle in which the terminal device receives the information transmitted by the first radio access network device is aligned with the start time for starting the on duration timer in the DRX cycle in which the terminal device receives the information transmitted by the second radio access network device.

Optionally, and not part of the claimed invention, in another implementation, after receiving the first indication information, the terminal device performs step 1250 and step 1260.

1240: The terminal device receives the first indication information from the first radio access network device.

In an implementation, step 1230 and step 1240 may be performed before step 1210. For example, when the first radio access network device sends the DRX configuration information of the first radio access network device to the terminal device, first indication information is carried.

In an implementation not being part of the claimed invention, step 1230 and step 1240 are optional. It should be noted that, step 1230 and step 1240 may alternatively be that the second access network device sends first indication information to the terminal device, and correspondingly, the terminal device receives the first indication information from the second access network device. This alternative however is not part of the claimed invention.

1250: The terminal device determines the first parameter. It should be understood that 1250 and 1210 may be performed simultaneously, or 1250 may be performed before 1210. This alternative however is not part of the claimed invention. Optionally, the terminal device may send the transmission delay variation and/or the variation of the SFTD between the first radio access network device and the second radio access network device to the first radio access network device; and/or the terminal device may send the transmission delay variation to the second radio access network device.

Optionally, the transmission delay variation in the first parameter may alternatively be received by the terminal device from the first radio access network device.

1260: The terminal device adjusts, based on the first parameter, the start time of the DRX cycle for receiving the information transmitted by the first radio access network device or the second radio access network device and/or the start time for starting the on duration timer in the DRX cycle. Specifically, the terminal device adjusts, based on the first parameter and according to Formula (3) or Formula (4), the start time for starting the on duration timer in the DRX cycle in which the terminal device receives the information transmitted by the first radio access network device or the second radio access network device. It should be understood that adjusting, by the terminal device, the start time of the DRX cycle for receiving the information transmitted by the first radio access network device or the second radio access network device and/or the start time for starting the on duration timer in the DRX cycle is triggered by the first indication information sent by the first radio access network device or by the first indication information sent by the second radio access network device.

For example, the first radio access network device may determine, based on the first parameter, the start time of the DRX cycle of the first radio access network device and/or the start time for starting the on duration timer in the DRX cycle, and determine, based on the start time of the DRX cycle and/or the start time for starting the on duration timer in the DRX cycle, to use first DRX configuration information in a plurality of pieces of DRX configuration information. The plurality of pieces of DRX configuration information are preconfigured by the first radio access network device and sent to the terminal device in advance.

For example, the first parameter is the transmission delay variation. Specifically, the first radio access network device determines that the first DRX configuration information is a set of DRX configuration information in which a value of drx-StartOffset is the closest to the value of drx-StartOffset plus the transmission delay variation in the plurality of pieces of DRX configuration information, and the set of DRX configuration information is the currently most appropriate DRX configuration information for the first radio access network device and the terminal device.

Optionally, the first radio access network device may send second indication information to the terminal device, where the second indication information indicates the terminal device to receive, by using the first DRX configuration information, the information transmitted by the first radio access network device, so that the start time for starting the on duration timer in the DRX cycle in which the terminal device receives the information transmitted by the first radio access network device is aligned with the start time for starting the on duration timer in the DRX cycle in which the terminal device receives the information transmitted by the second radio access network device. Correspondingly, the terminal device receives the second indication information from the first radio access network device, and receives, by using the first DRX configuration information, the information transmitted by the first radio access network device.

For example, the terminal device may also determine, based on the first parameter, the start time of the DRX cycle for receiving the information transmitted by the first radio access network device and/or the start time for starting the on duration timer in the DRX cycle. The terminal device determines, based on the start time of the DRX cycle for receiving the information transmitted by the first radio access network device and/or the start time for starting the on duration timer in the DRX cycle, to receive the information transmitted by the first radio access network device by using the first DRX configuration information in the plurality of pieces of DRX configuration information.

In the technical solution provided in this embodiment of this application, the first radio access network device may adjust, based on the determined transmission delay variation, the start time of the DRX cycle of the first radio access network device or the second radio access network device and/or the start time for starting the on duration timer in the DRX cycle. The first radio access network device or the second radio access network device may send first indication information to the terminal device, where the first indication information may indicate the terminal device to adjust the start time of the DRX cycle for receiving the information transmitted by the first radio access network device or the second radio access network device and/or the start time for starting the on duration timer in the DRX cycle, so that the start time for starting the on duration timer in the DRX cycle in which the terminal device receives the information transmitted by the first radio access network device is aligned with the start time for starting the on duration timer in the DRX cycle in which the terminal device receives the information transmitted by the second radio access network device. This can reduce power consumption of the terminal device.

Optionally, the terminal device measures a first SFTD, and the terminal device determines whether a difference between the first SFTD and a reference SFTD is greater than or equal to a preset threshold, where the reference SFTD is an SFTD last sent by the terminal device to the first radio access network device. When the difference between the first SFTD and the reference SFTD is greater than or equal to the preset threshold, the terminal device sends the first SFTD to the first radio access network device or the second radio access network device. In other words, the terminal device reports, to the first radio access network device or the second radio access network device, a currently measured SFTD between the first radio access network device and the second radio access network device. When the difference between the first SFTD and the reference SFTD is less than the preset threshold, the terminal device does not send the first SFTD to the first radio access network device or the second radio access network device. The preset threshold may be predefined, or may be configured by the first radio access network device/second radio access network device.

According to the solution, that a network side needs to deliver an SFTD measurement configuration to the terminal device again after the terminal device reports an SFTD result once can be avoided. This can reduce signaling overheads of the terminal device and the network side. In addition, in a conventional technology, after the terminal device reports an SFTD measurement result, the network side may not know change statuses of a transmission delay between the terminal device and the first radio access network device and a transmission delay between the terminal device and the second radio access network device, and the network side actually cannot know when to deliver an SFTD measurement configuration to the terminal device again. However, in this application, the network side may learn of the transmission delay variation between the first radio access network device and the terminal device, and the transmission delay variation between the second radio access network device and the terminal device. Therefore, the network side may know when to deliver an SFTD measurement configuration to the terminal device again. It should be noted that the solution of reporting the SFTD may be implemented independently from the foregoing solution of adjusting the start time of the DRX cycle for receiving the information transmitted by the first radio access network device and/or the start time for starting the on duration timer in the DRX cycle.

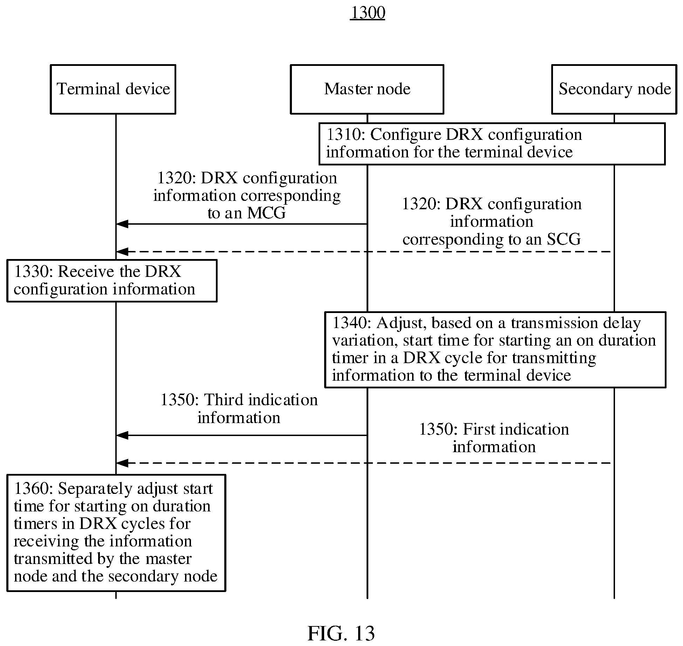

FIG. 13 is a schematic interaction flowchart of a communication method 1300 according to an embodiment of this application. This embodiment of this application is applicable to communication between a terminal device and a plurality of radio access network devices. In other words, the method is applicable to MR-DC, and the plurality of radio access network devices include a first radio access network device and a second radio access network device. The first radio access network device may be a radio access network device in a non-terrestrial network, and the second radio access network device may also be a radio access network device in a non-terrestrial network. For example, the first radio access network device is a secondary node, and the second radio access network device is a master node. A serving cell group provided by the first radio access network device for the terminal device is referred to as an SCG, and a serving cell group provided by the second radio access network device for the terminal device is referred to as an MCG.

1310: The master node and the secondary node separately configure DRX configuration information for the terminal device.

1320: The master node sends, to the terminal device, DRX configuration information corresponding to the MCG, and the secondary node sends, to the terminal device, DRX configuration information corresponding to the SCG. The DRX configuration information corresponding to the MCG includes DRX-cycle $_{MCG}$ and drx-StartOffset $_{MCG}$, and the DRX configuration information corresponding to the SCG includes DRX-cycle $_{SCG}$ and drx-StartOffset $_{SCG}$.

1330: The terminal device receives the DRX configuration information corresponding to the MCG that is sent by the master node, and the terminal device receives the DRX configuration information corresponding to the SCG that is sent by the secondary node.

1340: When the secondary node determines that a variation of a first transmission delay of information transmission between the secondary node and the terminal device is Var_Diff $_{SCG}$, the secondary node adjusts, based on Var_Diff $_{SCG}$, start time for starting an on duration timer in a DRX cycle in which the secondary node transmits information to the terminal device. Specifically, when a subframe number of a subframe of the secondary node satisfies Formula (3) or Formula (4), the secondary node starts the on duration timer, and may transmit the information to the terminal device.

When the master node determines that a variation of a second transmission delay of information transmission between the master node and the terminal device is Var_Diff $_{MCG}$, the master node adjusts, based on Var_Diff $_{MCG}$, start time for starting an on duration timer in a DRX cycle in which the master node transmits information to the terminal device. Specifically, when a subframe number of a subframe of the master node satisfies Formula (5) or Formula (6), the master node starts the on duration timer, and transmits the information to the terminal device.

$$[\left(SFN_{\_MCG} \times 10\right) + \textit{subframe number}_{\_MCG} + \textit{Var\_Diff}_{\_MCG}] \bmod \left(DRX-cycle_{\_MCG}\right) = drx-StartOffset_{\_MCG} \quad (5)$$

$$\left[\left(SFN_{\_MCG} \times 10\right) + \textit{subframe number}_{\_MCG}\right] \bmod \left(DRX-cycle_{\_MCG}\right) = \left(drx-StartOffset_{\_MCG} + \textit{Var\_Diff}_{\_MCG}\right) \bmod \left(DRX-cycle_{\_MCG}\right) \quad (6)$$

The master node and the secondary node may obtain, by using the descriptions in FIG. 12, the variation of the transmission delay of the information transmission between the master node and the terminal device and the variation of the transmission delay of the information transmission between the secondary node and the terminal device.

1350: The secondary node may send first indication information to the terminal device, where the first indication information indicates the terminal device to adjust start time for starting an on duration timer in a DRX cycle for receiving the information transmitted by the secondary node. Optionally, the first indication information may include Var_Diff $_{SCG}$ determined by the secondary node. Optionally, the terminal device may alternatively obtain, through measurement, the variation of the first transmission delay of the information transmission between the terminal device and the secondary node.

The master node may send third indication information to the terminal device, where the third indication information indicates the terminal device to adjust start time for starting an on duration timer in a DRX cycle for receiving the information transmitted by the master node. Optionally, the first indication information may include Var_Diff $_{MCG}$ determined by the master node. Optionally, the terminal device may alternatively obtain, through measurement, the variation of the second transmission delay of the information transmission between the terminal device and the master node.

In an implementation, step 1350 may be performed before step 1340. For example, the secondary node sends first indication information in step 1330, and the master node sends third indication information in step 1330.

In an implementation, step 1350 may be replaced with: The master node or the secondary node sends first indication information and/or third indication information to the terminal device. In other words, only the master node or the secondary node sends the indication information to the terminal device. Optionally, the first indication information and the third indication information are same indication information, which indicates the terminal device to adjust the start time for starting the on duration timers in the DRX cycles for receiving the information transmitted by the master node and the secondary node.

1360: The terminal device determines Var_Diff $_{SCG}$ corresponding to the secondary node, and adjusts the start time for starting the on duration timer in the DRX cycle for receiving the information transmitted by the secondary node. In an implementation, when the terminal device determines that a subframe number of a subframe of the secondary node satisfies Formula (3) or Formula (4), the terminal device starts the on duration timer to receive the information transmitted by the secondary node. In another implementation, after starting the on duration timer for the first time according to Formula (1), the terminal device does not determine, according to Formula (1), a moment at which the on duration timer is to be started, but fixedly starts the on duration timer based on the DRX cycle. In other words, after starting the on duration timer, the terminal device starts the on duration timer again after a fixed offset of the DRX cycle.

The terminal device determines $Var\_Diff_{MCG}$ corresponding to the master node, and adjusts the start time for starting the on duration timer in the DRX cycle for receiving the information transmitted by the master node. In an implementation, when the terminal device determines that a subframe number of a subframe of the master node satisfies Formula (5) or Formula (6), the terminal device starts the on duration timer to receive the information transmitted by the master node. In another implementation, after starting the on duration timer for the first time according to Formula (1), the terminal device does not determine, according to Formula (1), a moment at which the on duration timer is to be started, but fixedly starts the on duration timer based on the DRX cycle. In other words, after starting the on duration timer, the terminal device starts the on duration timer again after a fixed offset of the DRX cycle.

It should be understood that when the second radio access network device is a radio access network device in a terrestrial network, the second radio access network device/master node may not adjust start time for starting an on duration timer in a DRX cycle in which the second radio access network device/master node transmits information to the terminal device. Correspondingly, the terminal device does not adjust start time for starting an on duration timer in a DRX cycle for receiving the information transmitted by the second radio access network device/master node.

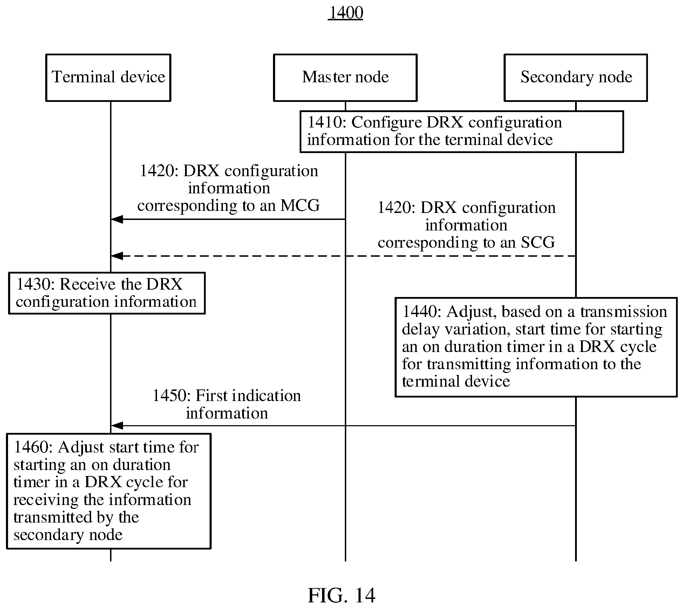

FIG. 14 is a schematic interaction flowchart of a communication method 1400 according to an embodiment of this application. This embodiment of this application is applicable to communication between a terminal device and a plurality of radio access network devices. In other words, the method is applicable to MR-DC, and the plurality of radio access network devices include a first radio access network device and a second radio access network device. The first radio access network device may be a radio access network device in a non-terrestrial network, and the second radio access network device may be a radio access network device in a terrestrial network or a non-terrestrial network. For example, the first radio access network device is a secondary node, and the second radio access network device is a master node. A serving cell group provided by the first radio access network device for the terminal device is referred to as an SCG, and a serving cell group provided by the second radio access network device for the terminal device is referred to as an MCG.

1410: The master node and the secondary node separately configure DRX configuration information for the terminal device.

1420: The master node sends, to the terminal device, DRX configuration information corresponding to the MCG, and the secondary node sends, to the terminal device, DRX configuration information corresponding to the SCG. The DRX configuration information corresponding to the MCG includes $DRX\text{-}cycle_{MCG}$ and $drx\text{-}StartOffset_{MCG}$, and the DRX configuration information corresponding to the SCG includes $DRX\text{-}cycle_{SCG}$ and $drx\text{-}StartOffset_{SCG}$.

1430: The terminal device receives the DRX configuration information corresponding to the MCG that is sent by the master node, and the terminal device receives the DRX configuration information corresponding to the SCG that is sent by the secondary node.

1440: The secondary node determines a variation of a difference between a first transmission delay of information transmission between the secondary node and the terminal device and a second transmission delay of information transmission between the master node and the terminal device. When the secondary node determines that the variation of the difference between the first transmission delay and the second transmission delay is $Var\_Diff_{SCG}$, the secondary node adjusts, based on $Var\_Diff_{SCG}$, start time for starting an on duration timer in a DRX cycle in which the secondary node transmits information to the terminal device. Specifically, when a subframe number of a subframe of the secondary node satisfies Formula (3) or Formula (4), the secondary node starts the on duration timer, and transmits the information to the terminal device. It should be understood that, if the transmission delay variation is the variation of the difference between the first transmission delay of the information transmission between the secondary node and the terminal device and the second transmission delay of the information transmission between the master node and the terminal device, only one base station needs to adjust start time for starting an on duration timer.

1450: The secondary node may send first indication information to the terminal device, where the first indication information indicates the terminal device to adjust start time for starting an on duration timer in a DRX cycle for receiving the information transmitted by the secondary node. Optionally, the first indication information may include $Var\_Diff_{SCG}$ determined by the secondary node. Optionally, the terminal device may alternatively obtain, through measurement, the variation of the difference between the first transmission delay of the information transmission between the secondary node and the terminal device and the second transmission delay of the information transmission between the master node and the terminal device.

In an implementation, step 1450 may be performed before step 1440. For example, the secondary node sends first indication information in step 1430.

1460: The terminal device adjusts the start time for starting the on duration timer in the DRX cycle for receiving the information transmitted by the secondary node.

In an implementation, the terminal device determines $Var\_Diff_{SCG}$ corresponding to the secondary node, and adjusts the start time for starting the on duration timer in the DRX cycle for receiving the information transmitted by the secondary node. Specifically, when the terminal device determines that a subframe number of a subframe of the secondary node satisfies Formula (3) or Formula (4), the terminal device starts the on duration timer to receive the information transmitted by the secondary node.

In another implementation, after starting the on duration timer for the first time according to Formula (1), the terminal device does not determine, according to Formula (1), a moment at which the on duration timer is to be started, but fixedly starts the on duration timer based on the DRX cycle. In other words, after starting the on duration timer, the terminal device starts the on duration timer again after a fixed offset of the DRX cycle.

Optionally, the second radio access network device/master node may alternatively adjust start time for starting an on duration timer in a DRX cycle in which the second radio access network device/master node transmits information to the terminal device. In this case, the first radio access network device/secondary node does not adjust start time for starting an on duration timer in a DRX cycle in which the first radio access network device/secondary node transmits information to the terminal device. This is not specifically limited.

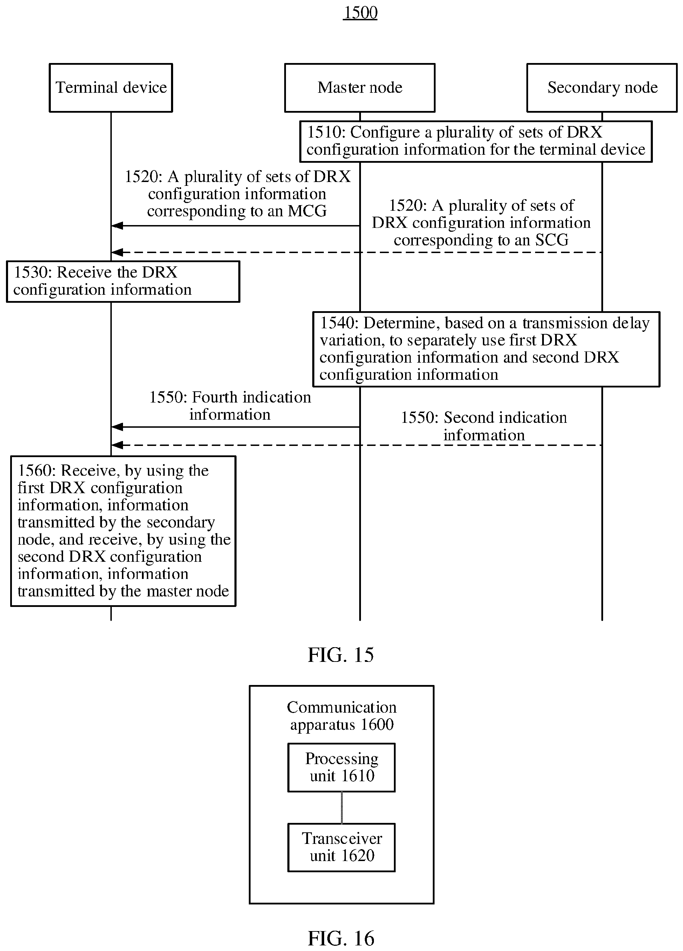

FIG. 15 is a schematic interaction flowchart of a communication method 1500 according to an embodiment of this application. This embodiment of this application is applicable to communication between a terminal device and a plurality of radio access network devices. In other words, the method is applicable to MR-DC, and the plurality of radio access network devices include a first radio access network device and a second radio access network device. The first radio access network device may be a radio access network device in a non-terrestrial network, and the second radio access network device may be a radio access network device in a non-terrestrial network. For example, the first radio access network device is a secondary node, and the second radio access network device is a master node. A serving cell group provided by the first radio access network device for the terminal device may be referred to as an SCG, and a serving cell group provided by the second radio access network device for the terminal device may be referred to as an MCG.

1510: The master node and the secondary node separately configure a plurality of sets of DRX configuration information for the terminal device.

1520: The master node sends, to the terminal device, a plurality of sets of DRX configuration information corresponding to the MCG, and the secondary node sends, to the terminal device, a plurality of sets of DRX configuration information corresponding to the SCG. Optionally, there is an association relationship between the plurality of sets of DRX configuration information corresponding to the MCG and the plurality of sets of DRX configuration information corresponding to the SCG. In other words, there is a combination relationship or a correspondence between a set of DRX configuration information corresponding to the MCG and one or more sets of DRX configuration information corresponding to the SCG. In the plurality of sets of DRX configuration information corresponding to the MCG, one set of DRX configuration information is DRX configuration information that can be immediately activated by the terminal device currently, and in the plurality of sets of DRX configuration information corresponding to the SCG, one set of DRX configuration information is also DRX configuration information that can be immediately activated by the terminal device currently. Optionally, the master node and the secondary node may further exchange the corresponding association relationship between the plurality of sets of DRX configuration information corresponding to the MCG and the plurality of sets of DRX configuration information corresponding to the SCG. For example, the master node sends, to the secondary node, the plurality of sets of DRX configuration information corresponding to the MCG. After determining the plurality of sets of DRX configuration information corresponding to the SCG, the secondary node sends, to the master node, the association relationship between the plurality of sets of DRX configuration information corresponding to the SCG and the plurality of sets of DRX configuration information corresponding to the MCG.

1530: The terminal device receives the plurality of sets of DRX configuration information corresponding to the MCG that are sent by the master node, and the terminal device receives the plurality of sets of DRX configuration information corresponding to the SCG that are sent by the secondary node.

1540: The secondary node determines a variation of a first transmission delay of information transmission between the secondary node and the terminal device, and determines, based on the variation of the first transmission delay, to transmit information to the terminal device by using first DRX configuration information in the plurality of sets of DRX configuration information corresponding to the SCG. The master node determines a variation of a second transmission delay of information transmission between the master node and the terminal device, and determines, based on the variation of the second transmission delay, to transmit information to the terminal device by using second DRX configuration information in the plurality of sets of DRX configuration information corresponding to the MCG.

1550: The secondary node sends second indication information to the terminal device, where the second indication information indicates the terminal device to receive, by using the first DRX configuration information, the information transmitted by the secondary node.

The master node sends fourth indication information to the terminal device, where the fourth indication information indicates the terminal device to receive, by using the second DRX configuration information, the information transmitted by the master node.

Optionally, the secondary node may indicate, by using an RRC message or a MAC CE message, the terminal device to receive, by using the first DRX configuration information, the information transmitted by the secondary node. The master node may also indicate, by using an RRC message or a MAC CE message, the terminal device to receive, by using the second DRX configuration information, the information transmitted by the master node.

1560: The terminal device receives the second indication information sent by the secondary node, and receives, by using the first DRX configuration information in the plurality of sets of DRX configuration information configured by the secondary node, the information transmitted by the secondary node.

The terminal device receives the fourth indication information sent by the master node, and receives, by using the second DRX configuration information in the plurality of sets of DRX configuration information configured by the master node, the information transmitted by the secondary node.

In the solution, the secondary node may determine, based on the variation of the first transmission delay of the information transmission between the secondary node and the terminal device, to transmit the information to the terminal device by using the first DRX configuration information in the plurality of sets of DRX configuration information corresponding to the SCG, and indicate the terminal device to receive, by using the first DRX configuration information, the information transmitted by the secondary node. The master node may determine, based on the variation of the second transmission delay of the information transmission between the master node and the terminal device, to transmit the information to the terminal device by using the second DRX configuration information in the plurality of sets of DRX configuration information corresponding to the MCG, and indicate the terminal device to receive, by using the second DRX configuration information, the information transmitted by the master node. This can ensure that start time for starting an on duration timer in a DRX cycle in which the terminal device receives the information transmitted by the secondary node is aligned with start time for starting an on duration timer in a DRX cycle in which the terminal device receives the information transmitted by the master node, to reduce power consumption of the terminal device.

Step 1550 and step 1560 are optional. The terminal device determines, by using a same solution as that of the master node and the secondary node, a specific set of DRX configuration information to be used. For example, the terminal device determines, according to the solutions in FIG. 12 to FIG. 14, a variation of a transmission delay of information transmission between the master node and the terminal device, a variation of a transmission delay of information transmission between the secondary node and the terminal device, and an SFTD between the master node and the secondary node, searches for a set of DRX configuration in which a value of drx-StartOffset is the closest to that of drx-StartOffset plus Var_diff in a plurality of sets of DRX configurations, and uses the set of DRX configuration as the currently most appropriate DRX configuration for the UE. In this way, this set of DRX configuration is used.

It should be understood that either of the secondary node and the master node may alternatively determine that the secondary node transmits information to the terminal device by using first DRX configuration information in the plurality of sets of DRX configuration information corresponding to the SCG, the master node transmits information to the terminal device by using second DRX configuration information in the plurality of sets of DRX configuration information corresponding to the MCG, and the terminal device is notified. After performing the determining, the either of the nodes sends indication information to the other node, to indicate DRX configuration information corresponding to the other node.

Optionally, the secondary node may alternatively determine a variation of a difference between the first transmission delay of the information transmission between the secondary node and the terminal device and the second transmission delay of the information transmission between the master node and the terminal device, and determine, based on the variation of the difference between the first transmission delay and the second transmission delay, to transmit information to the terminal device by using the first DRX configuration information in the plurality of sets of DRX configuration information corresponding to the SCG. The secondary node sends second indication information to the terminal device, where the second indication information indicates the terminal device to receive, by using the first DRX configuration information, the information transmitted by the secondary node. Correspondingly, the terminal device receives the second indication information sent by the secondary node, and receives, by using the first DRX configuration information in the plurality of sets of DRX configuration information configured by the secondary node, the information transmitted by the secondary node. In this case, the master node does not need to adjust the used DRX configuration information.

In an implementation, step 1540 to step 1560 are optional. The terminal device determines, by using a same solution as that of the master node and the secondary node, a specific set of DRX configuration information to be used. For example, the terminal device determines, according to the solutions in FIG. 12 to FIG. 14, a variation of a transmission delay of information transmission between the master node and the terminal device, a variation of a transmission delay of information transmission between the secondary node and the terminal device, and an SFTD between the master node and the secondary node, searches for a set of DRX configuration in which a value of drx-StartOffset is the closest to that of drx-StartOffset plus Var_diff in a plurality of sets of DRX configurations, and uses the set of DRX configuration as the currently most appropriate DRX configuration for the UE. Then, the terminal device notifies the master node and the secondary node of a specific set of DRX configuration to be used. Optionally, the terminal device only recommends a specific set of DRX configuration to be used to the master node or the secondary node, and finally the master node or the secondary node notifies the terminal device of a specific set of DRX configuration to be finally used. Alternatively, the terminal device determines a specific set of DRX configuration to be used. The terminal device respectively notifies the master node and the secondary node of specific sets of DRX configurations to be used.

An embodiment of this application provides a communication apparatus. FIG. 16 is a block diagram of the communication apparatus 1600 according to this embodiment of this application. The apparatus may be the first radio access network device in the method embodiment of this application. The communication apparatus 1600 includes:

a processing unit 1610, configured to determine a first parameter, where the first parameter includes a transmission delay variation and/or a variation of a system frame number and frame timing difference SFTD between the communication apparatus and a second radio access network device, where

the processing unit 1610 is further configured to adjust, based on the first parameter, start time of a DRX cycle of the communication apparatus and/or start time for starting an on duration timer in the DRX cycle; and

a transceiver unit 1620, configured to send first indication information to a terminal device, where the first indication information indicates the terminal device to adjust start time of a DRX cycle for receiving information transmitted by the communication apparatus and/or start time for starting an on duration timer in the DRX cycle.

Optionally, the transmission delay variation includes a variation of a first transmission delay of information transmission between the communication apparatus and the terminal device, or a variation of a difference between the first transmission delay and a second transmission delay of information transmission between the second radio access network device and the terminal device.

Optionally, the processing unit 1610 is specifically configured to determine the transmission delay variation; and the transceiver unit 1620 is specifically configured to receive the transmission delay variation from the terminal device and/or receive the variation of the SFTD from the terminal device.

Optionally, the first indication information includes the transmission delay variation.

Optionally, the processing unit 1610 is specifically configured to:

determine, based on the first parameter, the start time of the DRX cycle of the communication apparatus and/or the start time for starting the on duration timer in the DRX cycle; and

determine, based on the start time of the DRX cycle and/or the start time for starting the on duration timer in the DRX cycle, to use first DRX configuration information in a plurality of pieces of DRX configuration information.

Optionally, the transceiver unit 1620 is further configured to send second indication information to the terminal device, where the second indication information indicates the terminal device to receive, by using the first DRX configuration information, the information transmitted by the communication apparatus.

An embodiment of this application provides a communication apparatus. FIG. 17 is a block diagram of the communication apparatus 1700 according to this embodiment of this application. The apparatus may be the terminal device in the method embodiment of this application. The communication apparatus 1700 includes:

a transceiver unit 1710, configured to receive first indication information from a first radio access network device, where the first indication information indicates the communication apparatus to adjust start time of a DRX cycle for receiving information transmitted by the first radio access network device and/or start time for starting an on duration timer in the DRX cycle; and

a processing unit 1720, configured to determine a first parameter, where the first parameter includes a transmission delay variation and/or a variation of a system frame number and frame timing difference SFTD between the first radio access network device and a second radio access network device, where

the processing unit 1720 is further configured to adjust, based on the first parameter, the start time of the DRX cycle for receiving the information transmitted by the first radio access network device and/or the start time for starting the on duration timer in the DRX cycle.

Optionally, the transmission delay variation includes a variation of a first transmission delay of information transmission between the first radio access network device and the communication apparatus, or a variation of a difference between the first transmission delay and a second transmission delay of information transmission between the second radio access network device and the communication apparatus.

Optionally, the first indication information includes the transmission delay variation.

Optionally, the transceiver unit 1710 is further configured to send the transmission delay variation and/or the variation of the SFTD to the first radio access network device.

Optionally, the processing unit 1720 is specifically configured to:

determine, based on the first parameter, the start time of the DRX cycle for receiving the information transmitted by the first radio access network device and/or the start time for starting the on duration timer in the DRX cycle; and determine, based on the start time of the DRX cycle for receiving the information transmitted by the first radio access network device and/or the start time for starting the on duration timer in the DRX cycle, to use first DRX configuration information in a plurality of pieces of DRX configuration information.

Optionally, the transceiver unit 1710 is further configured to receive second indication information from the first radio access network device, where the second indication information indicates the communication apparatus to receive, by using the first DRX configuration information, the information transmitted by the first radio access network device.

Optionally, the processing unit 1720 is further configured to:

measure a first SFTD; and
determine whether a difference between the first SFTD and a reference SFTD is greater than or equal to a preset threshold, where the reference SFTD is an SFTD last sent by the communication apparatus to the first radio access network device; and
the transceiver unit 1710 is further configured to: when the difference between the first SFTD and the reference SFTD is greater than or equal to the preset threshold, send the first SFTD to the first radio access network device.

The claimed invention provides a communication device 1800. FIG. 18 is a block diagram of the communication device 1800 according to the claimed invention.

The communication device 1800 includes a processor 1810, a memory 1820, and a communication interface 1830.

The memory 1820 is configured to store executable instructions.

The processor 1810 is coupled to the memory 1820 through the communication interface 1830. The processor 1810 is configured to invoke and run the executable instructions in the memory 1820, to implement the method in embodiments of this application. The communication device may include the first radio access network device or the second radio access network device in embodiments of this application.

The processor 1810 may be an integrated circuit chip and has a capability of processing a signal. In an implementation process, steps in the foregoing method embodiments may be completed by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor.

Optionally, an embodiment of this application further provides a communication device. The communication device includes an input/output interface and a logic circuit. The input/output interface is configured to receive or output information. The logic circuit is configured to perform the method in any one of the foregoing method embodiments.

Optionally, an embodiment of this application further provides a communication system. The communication system includes the first radio access network device, the second radio access network device, and the terminal device in embodiments of this application.

The claimed invention further provides a computer-readable storage medium. The computer-readable storage medium stores a computer program used to implement the method in the foregoing method embodiments. When the computer program is run on a computer or a processor, the computer or the processor is enabled to implement the method in the foregoing method embodiments.

An embodiment of this application further provides a computer program product. The computer program product includes computer program code. When the computer program code is run on a computer, the method in the foregoing method embodiments is performed.

An embodiment of this application further provides a chip, including a processor, where the processor is connected to a memory, the memory is configured to store a computer program, and the processor is configured to execute the computer program stored in the memory, to enable the chip to perform the method in the foregoing method embodiments.

It should be understood that in embodiments of this application, numbers "first", "second", and the like are only used to distinguish between different objects, for example, to distinguish between different radio access network devices, and do not constitute a limitation on the scope of embodiments of this application. Embodiments of this application are not limited thereto.

In addition, the term "and/or" in this application describes only an association relationship between associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" or "two or more". For example, at least one of A, B, and C may represent the following seventh cases: Only A exists, only B exists, only C exists, both A and B exist, both A and C exist, and both C and B exist, and A, B, C all exist.

A person of ordinary skill in the art may be aware that, in combination with the examples described in embodiments disclosed in this specification, units and algorithm steps may be implemented by electronic hardware or a combination of computer software and the electronic hardware. Whether these functions are performed by hardware or software depends on particular applications and design constraint conditions of the technical solutions. A person skilled in the art may use different methods to implement the described functions for each particular application, but it should not be considered that this implementation goes beyond the scope of this application.

A person skilled in the art may clearly learn that, for the purpose of convenient and brief description, for a specific working process of the foregoing system, apparatus, and unit, refer to a corresponding process in the foregoing method embodiments. Details are not described herein again.

In embodiments provided in this application, it should be understood that the disclosed system, apparatus, and method may be implemented in another manner. For example, the described apparatus embodiments are only examples. For example, division into the units is only logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, and may be located in one position, or may be distributed on a plurality of network units. Some or all of the units may be selected based on an actual requirement to achieve objectives of the solutions of embodiments.

In addition, functional units in embodiments of this application may be integrated into one processing unit, or each unit may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes media such as a USB flash drive, a removable hard disk, a read-only memory (read-only memory, ROM), a random access memory (random access memory, RAM), a magnetic disk, an optical disc, or the like, that can store program code.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, applicable to communication between a terminal device and a plurality of radio access network devices, wherein the plurality of radio access network devices comprise a first radio access network device and a second radio access network device, the method is used for the first radio access network device, and the method comprises:

   determining (1210) a first parameter, wherein the first parameter comprises a transmission delay variation and/or a variation of a system frame number and frame timing difference, SFTD, between the first radio access network device and the second radio access network device; adjusting (1220), based on the first parameter, start time of a DRX cycle of the first radio access network device and/or start time for starting an on duration timer in the DRX cycle; and

sending (1230) indication information to the terminal device, wherein the first indication information indicates the terminal device to adjust start time of a DRX cycle for receiving information transmitted by the first radio access network device and/or start time for starting an on duration timer in the DRX cycle.

2. The method according to claim 1, wherein
the transmission delay variation comprises a variation of a first transmission delay of information transmission between the first radio access network device and the terminal device, or a variation of a difference between the first transmission delay and a second transmission delay of information transmission between the second radio access network device and the terminal device.

3. The method according to claim 1 or 2, wherein the determining a first parameter comprises:

determining the transmission delay variation or receiving, by the first radio access network device, the transmission delay variation from the terminal device; and/or
receiving the variation of the SFTD from the terminal device.

4. The method according to any one of claims 1 to 3, wherein
the first indication information comprises the transmission delay variation.

5. The method according to any one of claims 1 to 4, wherein the adjusting, based on the first parameter, start time of a DRX cycle of the first radio access network device and/or start time for starting an on duration timer in the DRX cycle comprises:

determining, based on the first parameter, the start time of the DRX cycle of the first radio access network device and/or the start time for starting the on duration timer in the DRX cycle; and
determining, based on the start time of the DRX cycle and/or the start time for starting the on duration timer in the DRX cycle, to use first DRX configuration information in a plurality of pieces of DRX configuration information.

6. The method according to claim 5, wherein the method further comprises:
sending second indication information to the terminal device, wherein the second indication information indicates the terminal device to receive, by using the first DRX configuration information, the information transmitted by the first radio access network device.

7. A communication method, applicable to communication between a terminal device and a plurality of radio access network devices, wherein the plurality of radio access network devices comprise a first radio access network device and a second radio access network device, the method is used for the terminal device, and the method comprises:

receiving (1240) first indication information from the first radio access network device, wherein the first indication information indicates the terminal device to adjust start time of a DRX cycle for receiving information transmitted by the first radio access network device and/or start time for starting an on duration timer in the DRX cycle; determining (1250) a first parameter, wherein the first parameter comprises a transmission delay variation and/or a variation of a system frame number and frame timing difference, SFTD, between the first radio access network device and the second radio access network device; and adjusting (1260), based on the first parameter, the start time of the DRX cycle for receiving the information transmitted by the first radio access network device and/or the start time for starting the on duration timer in the DRX cycle.

8. The method according to claim 7, wherein
the transmission delay variation comprises a variation of a first transmission delay of information transmission between the first radio access network device and the terminal device, or a variation of a difference between the first transmission delay and a second transmission delay of information transmission between the second radio access network device and the terminal device.

9. The method according to claim 7 or 8, wherein
the first indication information comprises the transmission delay variation.

10. The method according to any one of claims 7 to 9, wherein the method further comprises:
sending the transmission delay variation and/or the variation of the SFTD to the first radio access network device.

11. The method according to any one of claims 7 to 10, wherein the adjusting, based on the first parameter, the start time of the DRX cycle for receiving the information transmitted by the first radio access network device and/or the start time for starting the on duration timer in the DRX cycle comprises:

determining, based on the first parameter, the start time of the DRX cycle for receiving the information transmitted by the first radio access network device and/or the start time for starting the on duration timer in the DRX cycle; and determining, based on the start time of the DRX cycle for receiving the information transmitted by the first radio access network device and/or the start time for starting the on duration timer in the DRX cycle, to use first DRX configuration information in a plurality of pieces of DRX configuration information.

12. The method according to any one of claims 7 to 10, wherein the method further comprises:
receiving second indication information from the first radio access network device, wherein the second indication information indicates the terminal device to receive, by using the first DRX configuration information, the information transmitted by the first radio access network device.

13. The method according to any one of claims 7 to 12, wherein the method further comprises:

measuring a first SFTD;
determining whether a difference between the first SFTD and a reference SFTD is greater than or equal to a preset threshold, wherein the reference SFTD is an SFTD last sent by the terminal device to the first radio access network device; and
when the difference between the first SFTD and the reference SFTD is greater than or equal to the preset threshold, sending the first SFTD to the first radio access network device.

14. A communication apparatus (1800), wherein the apparatus comprises a processor (1810), a communication interface (1830), and a memory (1820), and the memory comprises a program instruction, and when the program instruction is run by the processor, the method according to any one of claims 1 to 6 is performed, or the method according to any one of claims 7 to 13 is performed.

15. A computer-readable storage medium, comprising a computer instruction, and when the computer instruction runs on a network device, the network device is enabled to perform the method according to any one of claims 1 to 6, or the network device is enabled to perform the method according to any one of claims 7 to 13.

**Patentansprüche**

1. Kommunikationsverfahren, das auf eine Kommunikation zwischen einem Endgerät und einer Vielzahl von Funkzugangsnetzgeräten angewendet wird, wobei die Vielzahl von Funkzugangsnetzgeräten ein erstes Funkzugangsnetzgerät und ein zweites Funkzugangsnetzgerät umfasst, wobei das Verfahren für das erste Funkzugangsnetzgerät verwendet wird und das Verfahren Folgendes umfasst:

Bestimmen (1210) eines ersten Parameters, wobei der erste Parameter eine Übertragungsverzögerungsvariation und/oder eine Variation einer Systemrahmennummer und Rahmenzeitdifferenz, SFTD, zwischen dem ersten Funkzugangsnetzgerät und dem zweiten Funkzugangsnetzgerät umfasst;
Anpassen (1220), basierend auf dem ersten Parameter, einer Startzeit eines DRX-Zyklus des ersten Funkzugangsnetzgeräts und/oder einer Startzeit zum Starten eines Einschaltdauerzeitgebers in dem DRX-Zyklus; und
Senden (1230) von Anzeigeinformationen an das Endgerät, wobei die ersten Anzeigeinformationen dem Endgerät anzeigen, eine Startzeit eines DRX-Zyklus zum Empfangen von Informationen, die durch das erste Funkzugangsnetzgerät übermittelt werden, und/oder eine Startzeit zum Starten eines Einschaltdauerzeitgebers in dem DRX-Zyklus anzupassen.

2. Verfahren nach Anspruch 1, wobei
die Übertragungsverzögerungsvariation eine Variation einer ersten Übertragungsverzögerung der Informationsübertragung zwischen dem ersten Funkzugangsnetzgerät und dem Endgerät oder eine Variation einer Differenz zwischen der ersten Übertragungsverzögerung und einer zweiten Übertragungsverzögerung der Informationsübertragung zwischen dem zweiten Funkzugangsnetzgerät und dem Endgerät umfasst.

3. Verfahren nach Anspruch 1 oder 2, wobei das Bestimmen eines ersten Parameters Folgendes umfasst: Bestimmen der Übertragungsverzögerungsvariation oder Empfangen, durch das erste Funkzugangsnetzgerät, der Übertragungsverzögerungsvariation von dem Endgerät; und/oder Empfangen der Variation der SFTD von dem Endgerät.

4. Verfahren nach einem der Ansprüche 1 bis 3, wobei die ersten Anzeigeinformationen die Übertragungsverzögerungsvariation umfassen.

5. Verfahren nach einem der Ansprüche 1 bis 4, wobei das Anpassen, basierend auf dem ersten Parameter, einer Startzeit eines DRX-Zyklus des ersten Funkzugangsnetzgeräts und/oder einer Startzeit zum Starten eines Einschaltdauerzeitgebers in dem DRX-Zyklus Folgendes umfasst:

   Anpassen, basierend auf dem ersten Parameter, der Startzeit des DRX-Zyklus des ersten Funkzugangsnetzgeräts und/oder der Startzeit zum Starten des Einschaltdauerzeitgebers in dem DRX-Zyklus; und
   Bestimmen, basierend auf der Startzeit des DRX-Zyklus und/oder der Startzeit zum Starten des Einschaltdauerzeitgebers in dem DRX-Zyklus, erste DRX-Konfigurationsinformationen in einer Vielzahl von Teilen von DRX-Konfigurationsinformationen zu verwenden.

6. Verfahren nach Anspruch 5, wobei das Verfahren ferner Folgendes umfasst: Senden zweiter Anzeigeinformationen an das Endgerät, wobei die zweiten Anzeigeinformationen dem Endgerät anzeigen, unter Verwendung der ersten DRX-Konfigurationsinformationen die Informationen, die durch das erste Funkzugangsnetzgerät übermittelt werden, zu empfangen.

7. Kommunikationsverfahren, das auf eine Kommunikation zwischen einem Endgerät und einer Vielzahl von Funkzugangsnetzgeräten angewendet wird, wobei die Vielzahl von Funkzugangsnetzgeräten ein erstes Funkzugangsnetzgerät und ein zweites Funkzugangsnetzgerät umfasst, wobei das Verfahren für das Endgerät verwendet wird und das Verfahren Folgendes umfasst:

   Empfangen (1240) erster Anzeigeinformationen von dem ersten Funkzugangsnetzgerät, wobei die ersten Anzeigeinformationen dem Endgerät anzeigen, eine Startzeit eines DRX-Zyklus zum Empfang von Informationen, die durch das erste Funkzugangsnetzgerät übermittelt werden, und/oder eine Startzeit zum Starten eines Einschaltdauerzeitgebers in dem DRX-Zyklus anzupassen;
   Bestimmen (1250) eines ersten Parameters, wobei der erste Parameter eine Übertragungsverzögerungsvariation und/oder eine Variation einer Systemrahmennummer und Rahmenzeitdifferenz, SFTD, zwischen dem ersten Funkzugangsnetzgerät und dem zweiten Funkzugangsnetzgerät umfasst; und
   Anpassen (1260), basierend auf dem ersten Parameter, der Startzeit des DRX-Zyklus zum Empfangen der Informationen, die durch das erste Funkzugangsnetzgerät übermittelt werden, und/oder der Startzeit zum Starten des Einschaltdauerzeitgebers in dem DRX-Zyklus.

8. Verfahren nach Anspruch 7, wobei die Übertragungsverzögerungsvariation eine Variation einer ersten Übertragungsverzögerung der Informationsübertragung zwischen dem ersten Funkzugangsnetzgerät und dem Endgerät oder eine Variation einer Differenz zwischen der ersten Übertragungsverzögerung und einer zweiten Übertragungsverzögerung der Informationsübertragung zwischen dem zweiten Funkzugangsnetzgerät und dem Endgerät umfasst.

9. Verfahren nach Anspruch 7 oder 8, wobei die ersten Anzeigeinformationen die Übertragungsverzögerungsvariation umfassen.

10. Verfahren nach einem der Ansprüche 7 bis 9, wobei das Verfahren ferner Folgendes umfasst: Senden der Übertragungsverzögerungsvariation und/oder der Variation der SFTD an das erste Funkzugangsnetzgerät.

11. Verfahren nach einem der Ansprüche 7 bis 10, wobei das Anpassen, basierend auf dem ersten Parameter, der Startzeit des DRX-Zyklus zum Empfangen der Informationen, die durch das erste Funkzugangsnetzgerät übermittelt werden, und/oder der Startzeit zum Starten des Einschaltdauerzeitgebers in dem DRX-Zyklus Folgendes umfasst:

   Bestimmen, basierend auf dem ersten Parameter, der Startzeit des DRX-Zyklus zum Empfangen der Informationen, die durch das erste Funkzugangsnetzgerät übermittelt werden, und/oder der Startzeit zum Starten des Einschaltdauerzeitgebers in dem DRX-Zyklus; und

Bestimmen, basierend auf der Startzeit des DRX-Zyklus zum Empfangen der Informationen, die durch das erste Funkzugangsnetz übermittelt werden, und/oder der Startzeit zum Starten des Einschaltdauerzeitgebers in dem DRX-Zyklus, erste DRX-Konfigurationsinformationen in einer Vielzahl von Teilen von DRX-Konfigurationsinformationen zu verwenden.

12. Verfahren nach einem der Ansprüche 7 bis 10, wobei das Verfahren ferner Folgendes umfasst:
Empfangen zweiter Anzeigeinformationen von dem ersten Funkzugangsnetzgerät, wobei die zweiten Anzeigeinformationen dem Endgerät anzeigen, unter Verwendung der ersten DRX-Konfigurationsinformationen die Informationen, die durch das erste Funkzugangsnetzgerät übermittelt werden, zu empfangen.

13. Verfahren nach einem der Ansprüche 7 bis 12, wobei das Verfahren ferner Folgendes umfasst:

Messen einer ersten SFTD;
Bestimmen, ob eine Differenz zwischen der ersten SFTD und einer Referenz-SFTD größer als oder gleich einem voreingestellten Schwellenwert ist, wobei die Referenz-SFTD eine SFTD ist, die zuletzt durch das Endgerät an das erste Funkzugangsnetzgerät gesendet wurde; und
wenn die Differenz zwischen der ersten SFTD und der Referenz-SFTD größer als oder gleich dem voreingestellten Schwellenwert ist, Senden der ersten SFTD an das erste Funkzugangsnetzgerät.

14. Kommunikationsvorrichtung (1800), wobei die Vorrichtung einen Prozessor (1810), eine Kommunikationsschnittstelle (1830) und einen Speicher (1820) umfasst und der Speicher eine Programmanweisung umfasst, und, wenn die Programmanweisung durch den Prozessor ausgeführt wird, das Verfahren nach einem der Ansprüche 1 bis 6 durchgeführt wird oder das Verfahren nach einem der Ansprüche 7 bis 13 durchgeführt wird.

15. Computerlesbares Speichermedium, umfassend eine Computeranweisung, und wobei, wenn die Computeranweisung auf einem Netzgerät ausgeführt wird, das Netzgerät in die Lage versetzt wird, das Verfahren nach einem der Ansprüche 1 bis 6 durchzuführen, oder das Netzgerät in die Lage versetzt wird, das Verfahren nach einem der Ansprüche 7 bis 13 durchzuführen.

**Revendications**

1. Procédé de communication applicable à la communication entre un dispositif terminal et une pluralité de dispositifs de réseau d'accès radio, dans lequel la pluralité de dispositifs de réseaux d'accès radio comprend un premier dispositif de réseau d'accès radio et un second dispositif de réseau d'accès radio, le procédé est utilisé pour le premier dispositif de réseau d'accès radio, et le procédé comprend :

la détermination (1210) d'un premier paramètre, dans lequel le premier paramètre comprend une variation de délai de transmission et/ou une variation d'une différence de synchronisation de trame et de numéro de trame système, SFTD, entre le premier dispositif de réseau d'accès radio et le second dispositif de réseau d'accès radio ;
le réglage (1220), sur la base du premier paramètre, de l'heure de début d'un cycle DRX du premier dispositif de réseau d'accès radio et/ou de l'heure de début pour le démarrage d'une minuterie de durée d'activation dans le cycle DRX ; et
l'envoi (1230) d'informations d'indication au dispositif terminal, dans lequel les premières informations d'indication indiquent au dispositif terminal de régler l'heure de début d'un cycle DRX pour la réception d'informations transmises par le premier dispositif de réseau d'accès radio et/ou l'heure de début pour le démarrage d'une minuterie de durée d'activation dans le cycle DRX.

2. Procédé selon la revendication 1, dans lequel la variation du délai de transmission comprend une variation d'un premier délai de transmission d'informations entre le premier dispositif de réseau d'accès radio et le dispositif terminal, ou une variation de la différence entre le premier délai de transmission et un second délai de transmission d'informations entre le second dispositif de réseau d'accès radio et le dispositif terminal.

3. Procédé selon la revendication 1 ou 2, dans lequel la détermination d'un premier paramètre comprend :

la détermination de la variation du délai de transmission ou la réception, par le premier dispositif de réseau d'accès radio, de la variation du délai de transmission en provenance du dispositif terminal ; et/ou
la réception de la variation de la SFTD en provenance du dispositif terminal.

4. Procédé selon l'une quelconque des revendications 1 à 3, dans lequel
   les premières informations d'indication comprennent la variation du délai de transmission.

5. Procédé selon l'une quelconque des revendications 1 à 4, dans lequel le réglage, sur la base du premier paramètre, de l'heure de début d'un cycle DRX du premier dispositif de réseau d'accès radio et/ou de l'heure de début pour le démarrage d'une minuterie de durée d'activation dans le cycle DRX comprend :

   la détermination, sur la base du premier paramètre, de l'heure de début du cycle DRX du premier dispositif de réseau d'accès radio et/ou de l'heure de début pour le démarrage de la minuterie de durée d'activation dans le cycle DRX ; et
   la détermination, sur la base de l'heure de début du cycle DRX et/ou de l'heure de début pour le démarrage du minuteur de durée d'activation dans le cycle DRX, de l'utilisation des premières informations de configuration DRX dans une pluralité d'informations de configuration DRX.

6. Procédé selon la revendication 5, dans lequel le procédé comprend également :
   l'envoi de secondes informations d'indication au dispositif terminal, dans lequel les secondes informations d'indication indiquent au dispositif terminal la réception, à l'aide des premières informations de configuration DRX, des informations transmises par le premier dispositif de réseau d'accès radio.

7. Procédé de communication, applicable à la communication entre un dispositif terminal et une pluralité de dispositifs de réseau d'accès radio, dans lequel la pluralité de dispositifs de réseaux d'accès radio comprend un premier dispositif de réseau d'accès radio et un second dispositif de réseau d'accès radio, le procédé est utilisé pour le dispositif terminal, et le procédé comprend :

   la réception (1240) de premières informations d'indication en provenance du dispositif de réseau d'accès radio, dans lequel les premières informations d'indication indiquent au dispositif terminal de régler l'heure de début d'un cycle DRX pour la réception d'informations transmises par le premier dispositif de réseau d'accès radio et/ou l'heure de début pour le démarrage d'une minuterie de durée d'activation dans le cycle DRX ;
   la détermination (1250) d'un premier paramètre, dans lequel le premier paramètre comprend une variation de délai de transmission et/ou une variation d'une différence de synchronisation de trame et de numéro de trame système, SFTD, entre le premier dispositif de réseau d'accès radio et le second dispositif de réseau d'accès radio ; et
   le réglage (1260), sur la base du premier paramètre, de l'heure de début du cycle DRX pour la réception des informations transmises par le premier dispositif de réseau d'accès radio et/ou de l'heure de début pour le démarrage du minuteur de durée d'activation dans le cycle DRX.

8. Procédé selon la revendication 7, dans lequel la variation du délai de transmission comprend une variation d'un premier délai de transmission d'informations entre le premier dispositif de réseau d'accès radio et le dispositif terminal, ou une variation de la différence entre le premier délai de transmission et un second délai de transmission d'informations entre le second dispositif de réseau d'accès radio et le dispositif terminal.

9. Procédé selon la revendication 7 ou 8, dans lequel les premières informations d'indication comprennent la variation du délai de transmission.

10. Procédé selon l'une quelconque des revendications 7 à 9, dans lequel le procédé comprend également :
    l'envoi de la variation du délai de transmission et/ou de la variation de la SFTD au premier dispositif de réseau d'accès radio.

11. Procédé selon l'une quelconque des revendications 7 à 10, dans lequel le réglage, sur la base du premier paramètre, de l'heure de début du cycle DRX pour la réception des informations transmises par le premier dispositif de réseau d'accès radio et/ou de l'heure de début pour le démarrage du minuteur de durée d'activation dans le cycle DRX, comprend :

    la détermination, sur la base du premier paramètre, de l'heure de début du cycle DRX pour la réception des informations transmises par le premier dispositif de réseau d'accès radio et/ou de l'heure de début pour le démarrage du minuteur de durée d'activation dans le cycle DRX ; et

la détermination, sur la base de l'heure de début du cycle DRX pour la réception des informations transmises par le premier dispositif de réseau d'accès radio et/ou de l'heure de début pour le démarrage du minuteur de durée d'activation dans le cycle DRX, de l'utilisation des premières informations de configuration DRX dans une pluralité d'informations de configuration DRX.

**12.** Procédé selon l'une quelconque des revendications 7 à 10, dans lequel le procédé comprend également :
la réception de secondes informations d'indication en provenance du premier dispositif de réseau d'accès radio, dans lequel les secondes informations d'indication indiquent au dispositif terminal la réception, à l'aide des premières informations de configuration DRX, des informations transmises par le premier dispositif de réseau d'accès radio.

**13.** Procédé selon l'une quelconque des revendications 7 à 12, dans lequel le procédé comprend également :

la mesure d'une première SFTD ;

la détermination si une différence entre la première SFTD et une SFTD de référence est supérieure ou égale à un seuil prédéfini, dans lequel la SFTD de référence est une SFTD envoyée en dernier lieu par le dispositif terminal au premier dispositif de réseau d'accès radio ; et

lorsque la différence entre la première SFTD et la SFTD de référence est supérieure ou égale au seuil prédéfini, l'envoi de la première SFTD au premier dispositif de réseau d'accès radio.

**14.** Appareil de communication (1800), dans lequel l'appareil comprend un processeur (1810), une interface de communication (1830) et une mémoire (1820), et la mémoire comprend une instruction de programme, et lorsque l'instruction de programme est exécutée par le processeur, le procédé selon l'une quelconque des revendications 1 à 6 est mis en œuvre, ou le procédé selon l'une quelconque des revendications 7 à 13 est mis en œuvre.

**15.** Support de stockage lisible par ordinateur, comprenant une instruction informatique, dans lequel lorsque l'instruction informatique est exécutée sur un dispositif de réseau, le dispositif de réseau est activé pour mettre en œuvre le procédé selon l'une quelconque des revendications 1 à 6, ou le dispositif de réseau est activé pour mettre en œuvre le procédé selon l'une quelconque des revendications 7 à 13.

CN device

First radio access
network device

Terminal device

Second radio access
network device

FIG. 1

FIG. 2

Satellite 301

Network device 302

Terminal device 303

FIG. 3

Terminal device

Satellite

Gateway based on satellite communication

Network device

Core network

FIG. 4

NR Uu

Terminal device

Satellite

Gateway based on satellite communication

Core network

FIG. 5

FIG. 6

FIG. 7

FIG. 8

Long discontinuous reception cycle

Running time
period of an on
duration timer

Running time
period of the on
duration timer

Short discontinuous
reception cycle

Running time
period of the on
duration timer

FIG. 9

Receive a PDCCH
indicating initial
data transmission

Running time period
of an on duration timer

Running time period
of the inactivity timer

Start an
inactivity timer

Restart the
inactivity timer

FIG. 10

Because of high-speed movement of
a non-terrestrial network device in an
NTN, running time periods of on
duration timers that respectively
correspond to the MCG and the SCG
and that are of a UE are not aligned

FIG. 11

1200

```
┌─────────────────────┐                    ┌─────────────────┐
│  First radio access │                    │    Terminal     │
│    network device   │                    │     device      │
└─────────────────────┘                    └─────────────────┘
```

┌──────────────────────────────────────┐
│ 1210: Determine a first parameter, where │
│ the first parameter includes a          │
│ transmission delay variation and/or a   │
│ variation of an SFTD between the first  │
│ radio access network device and a       │
│ second radio access network device      │
└──────────────────────────────────────┘

┌──────────────────────────────────────┐
│ 1220: Adjust, based on the first        │
│ parameter, start time of a DRX cycle of │
│ the first radio access network device and/ │
│ or start time for starting an on duration │
│ timer in the DRX cycle                  │
└──────────────────────────────────────┘

1230: First indication information

┌──────────────────────────────────────────────┐
│ 1240: Receive the first indication information │
└──────────────────────────────────────────────┘

┌──────────────────────────────────────┐
│ 1250: Determine the first parameter     │
└──────────────────────────────────────┘

┌──────────────────────────────────────────────┐
│ 1260: Adjust, based on the first parameter,     │
│ start time of a DRX cycle for receiving         │
│ information transmitted by the first radio      │
│ access network device and/or start time for     │
│ starting an on duration timer in the DRX cycle  │
└──────────────────────────────────────────────┘

FIG. 12

1300

| Terminal device | Master node | Secondary node |
|---|---|---|

1310: Configure DRX configuration information for the terminal device

1320: DRX configuration information corresponding to an MCG

1320: DRX configuration information corresponding to an SCG

1330: Receive the DRX configuration information

1340: Adjust, based on a transmission delay variation, start time for starting an on duration timer in a DRX cycle for transmitting information to the terminal device

1350: Third indication information

1350: First indication information

1360: Separately adjust start time for starting on duration timers in DRX cycles for receiving the information transmitted by the master node and the secondary node

FIG. 13

1400

| Terminal device | Master node | Secondary node |

1410: Configure DRX configuration information for the terminal device

1420: DRX configuration information corresponding to an MCG

1420: DRX configuration information corresponding to an SCG

1430: Receive the DRX configuration information

1440: Adjust, based on a transmission delay variation, start time for starting an on duration timer in a DRX cycle for transmitting information to the terminal device

1450: First indication information

1460: Adjust start time for starting an on duration timer in a DRX cycle for receiving the information transmitted by the secondary node

FIG. 14

1500

| Terminal device | Master node | Secondary node |

1510: Configure a plurality of sets of DRX configuration information for the terminal device

1520: A plurality of sets of DRX configuration information corresponding to an MCG

1520: A plurality of sets of DRX configuration information corresponding to an SCG

1530: Receive the DRX configuration information

1540: Determine, based on a transmission delay variation, to separately use first DRX configuration information and second DRX configuration information

1550: Fourth indication information

1550: Second indication information

1560: Receive, by using the first DRX configuration information, information transmitted by the secondary node, and receive, by using the second DRX configuration information, information transmitted by the master node

FIG. 15

Communication apparatus 1600

Processing unit 1610

Transceiver unit 1620

FIG. 16

Communication
apparatus 1700

Transceiver
unit 1710

Processing
unit 1720

FIG. 17

Communication
device 1800

Processor
1810

Memory
1820

Communication
interface 1830

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210213306X

**Non-patent literature cited in the description**

- **ZTE**. Discussion on SFTD accuracy requirements for NR DC. *3GPP DRAFT; R4-1906389*, 03 May 2019